# EUROPÄISCHE PATENTSCHRIFT

(11) **EP 2 834 096 B1**
(45) Veröffentlichungstag und Bekanntmachung des Hinweises auf die Patenterteilung: **17.02.2016**
(21) Anmeldenummer: 13718109.5
(22) Anmeldetag: 04.04.2013
(51) Int. Cl.: B60K 6/365, F16H 3/72, B60K 6/387, B60K 6/445

(54) **MEHRSTUFENGETRIEBE FÜR EIN KRAFTFAHRZEUG**
MULTI-STAGE TRANSMISSION FOR A MOTOR VEHICLE
BOÎTE DE VITESSES MULTI-ÉTAGÉE POUR UN VÉHICULE AUTOMOBILE

(30) Priorität: 05.04.2012 DE 102012007054
(43) Veröffentlichungstag der Anmeldung: 11.02.2015
(73) Patentinhaber: Daimler AG, 70327 Stuttgart (DE)
(72) Erfinder: SCHILDER, Tobias, 70435 Stuttgart (DE); RIEDL, Klaus, 72074 Tübingen (DE); MÜLLER, Jörg, 09119 Chemnitz (DE); RESCH, Rico, 09112 Chemnitz (DE); LEESCH, Mirko, 09419 Thum (DE)
(74) Vertreter: JENSEN & SON
(86) Internationale Anmeldenummer: PCT/EP2013/001001
(87) Internationale Veröffentlichungsnummer: WO 2013/149728

(56) Entgegenhaltungen:
- US-A1- 2003 078 126
- US-A1- 2007 197 335
- US-A1- 2008 176 697

## Beschreibung

Die Erfindung betrifft ein Mehrstufengetriebe für ein Kraftfahrzeug nach dem Oberbegriff des Anspruchs 1.

Aus der US 2007/0197335 A1 ist ein Mehrstufengetriebe für ein Kraftfahrzeug mit drei entlang einer Hauptrotationsachse hintereinander angeordneten Planetenradgetrieben, mit einer Getriebeeingangswelle zur Anbindung eines Verbrennungsmotors, mit einer Getriebeausgangswelle zur Anbindung von Antriebsrädern, mit einer ersten Zwischenwelle zur Anbindung eines ersten Elektromotors, mit einer zweiten Zwischenwelle zur Anbindung eines zweiten Elektromotors und mit sechs jeweils zwei Kopplungselemente aufweisenden Schalteinheiten bekannt. Die sechs Schalteinheiten sind zur Schaltung von zumindest sechs verbrennungsmotorischen Vorwärtsgetriebegängen, zumindest vier elektromotorischen Vorwärtsgetriebegängen und zumindest vier EVT-Fahrbereichen vorgesehen, wobei zumindest eines der Planetenradgetriebe einen Doppelplanetenradsatz aufweist.

Der Erfindung liegt insbesondere die Aufgabe zugrunde, ein kompaktes Mehrstufengetriebe zur Ausbildung eines Hybridantriebsmoduls mit einer hohen Flexibilität bereitzustellen. Sie wird gemäß der Erfindung durch die Merkmale des Anspruchs 1 gelöst. Weitere Ausgestaltungen ergeben sich aus den Unteransprüchen.

Erfindungsgemäß wird ein Mehrstufengetriebe, insbesondere für ein Kraftfahrzeug, mit zumindest drei, einem ersten, einem zweiten und einem dritten, wirkungsmäßig miteinander verbundenen Planetenradgetrieben, mit einer Getriebeeingangswelle zur Anbindung eines Verbrennungsmotors, mit einer Getriebeausgangswelle zur Anbindung von Antriebsrädern, mit einer ersten Zwischenwelle zur Anbindung eines ersten Elektromotors, mit einer zweiten Zwischenwelle zur Anbindung eines zweiten Elektromotors und mit sechs Schalteinheiten, die jeweils zwei Kopplungselemente aufweisen und die zumindest konstruktiv zur Schaltung von zumindest sechs verbrennungsmotorischen Vorwärtsgetriebegängen, zumindest vier elektromotorischen Vorwärtsgetriebegängen und zumindest vier EVT-Fahrbereichen vorgesehen sind, wobei zumindest eines der Planetenradgetriebe einen Doppelplanetenradsatz aufweist. Dadurch kann ein Mehrstufengetriebe mit einer sehr hohen Flexibilität bereitgestellt werden, da zum einen eine hohe Lastschaltbarkeit und zum anderen ein hoher Wirkungsgrad, insbesondere auch in Verbindung mit den Elektromotoren, erreicht werden kann. Durch Verwendung von zumindest einem Planetenradgetriebe, das einen Doppelplanetenradsatz aufweist, können insbesondere Drehzahlverhältnisse und/oder Drehmomentbelastungen verbessert werden. Unter einer "Schalteinheit" soll insbesondere sowohl eine Kupplungseinheit als auch eine Bremseinheit verstanden werden. Unter einer "Kupplungseinheit" soll insbesondere eine Schalteinheit verstanden werden, die dazu vorgesehen ist, ihre zwei drehbar angeordneten Kopplungselemente, die in einem geöffneten Zustand unabhängig voneinander verdrehbar sind, in einem geschlossenen Zustand drehfest miteinander zu verbinden. Unter einer "Bremseinheit" soll insbesondere eine Schalteinheit verstanden werden, die dazu vorgesehen ist, ihr drehbares Kopplungselement in einem geschlossenen Zustand mit ihrem feststehenden Kopplungselement zu verbinden, wobei das feststehende Kopplungselement drehfest mit einem Getriebegehäuse verbunden und/oder einstückig mit dem Getriebegehäuse ausgeführt sein kann. Unter "konstruktiv zur Schaltung eines Getriebegangs vorgesehen" soll insbesondere verstanden werden, dass mittels der Schalteinheiten mechanisch ein entsprechender Getriebegang grundsätzlich bildbar ist, unabhängig davon, ob im Rahmen einer Schaltstrategie auf die Schaltung des Getriebegangs verzichtet wird oder nicht. Beispielsweise sind bei einer erfindungsgemäßen Ausgestaltung die Schalteineinheiten konstruktiv zur Schaltung von mehr als vier EVT-Fahrbereichen vorgesehen, es ist aber denkbar, für das Mehrstufengetriebe eine Betriebsstrategie vorzusehen, die lediglich zwei oder sogar nur einen der EVT-Fahrbereiche benutzt. Ebenso ist eine Betriebsstrategie denkbar, die vier oder mehr EVT-Fahrbereiche nutzt. Unter "vorgesehen" soll insbesondere speziell programmiert, ausgestattet und/oder ausgelegt verstanden werden.

In einer besonders vorteilhaften Ausgestaltung ist dabei zumindest eine der Schalteinheiten als eine formschlüssig schließende Schalteinheit ausgebildet. Dadurch kann ein Leistungsverlust innerhalb des Mehrstufengetriebes vorteilhaft verringert werden. Unter einer "formschlüssig schließenden Schalteinheit" soll dabei insbesondere eine Schalteinheit verstanden werden, die zur Verbindung ihrer Kopplungselemente bzw. zur Anbindung ihres Kopplungselements eine Verzahnung und/oder Klauen aufweist, die zur Herstellung einer drehfesten Kopplung formschlüssig ineinander greifen, wie insbesondere eine über eine Schiebemuffe schaltbare Klauenschalteinheit. Vorzugsweise sind drei der Schalteinheiten als formschlüssig schließende Schalteinheiten ausbildbar.

Unter "einem ersten, einem zweiten und einem dritten Planetenradgetriebe" soll in diesem Zusammenhang insbesondere eine Anordnung von drei Planetenradgetrieben verstanden werden, die zur Schaltung der Getriebegänge wirkungsmäßig miteinander verbunden sind. Vorzugsweise sind die Planetenradgetriebe entlang einer Hauptrotationsachse hintereinander angeordnet, wobei vorteilhafterweise das erste Planetenradgetriebe der Getriebeeingangswelle zugewandt ist. Grundsätzlich ist aber auch eine räumliche Anordnung der Planetenradgetriebe, beispielsweise in einer gestapelten Anordnung, denkbar.

Zur Vereinfachung sollen weiter unter einem "ersten bis dritten Planetenradträger", einem "ersten bis dritten Sonnenrad" und einem "ersten bis dritten Hohlrad" ein dem ersten bis dritten Planetenradgetriebe zugeordneter Planetenradträger, ein Sonnenrad oder ein Hohlrad verstanden werden, d.h. beispielsweise, dass unter dem ersten Planetenradträger ein Planetenradträger des ersten Planetenradgetriebes verstanden werden soll.

Weitere Ausgestaltungen und Vorteile ergeben sich aus der folgenden Zeichnungsbeschreibung, den Ansprüchen und den Zeichnungen. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Getriebeschema eines erfindungsgemäßen Mehrstufengetriebes,
- Fig. 2: ein Schaltschema für das Mehrstufengetriebe,
- Fig. 3: eine Lastschaltbarkeit innerhalb des Schaltschemas, und
- Fig. 4: ein weiteres Getriebeschema eines erfindungsgemäßen Mehrstufengetriebes.

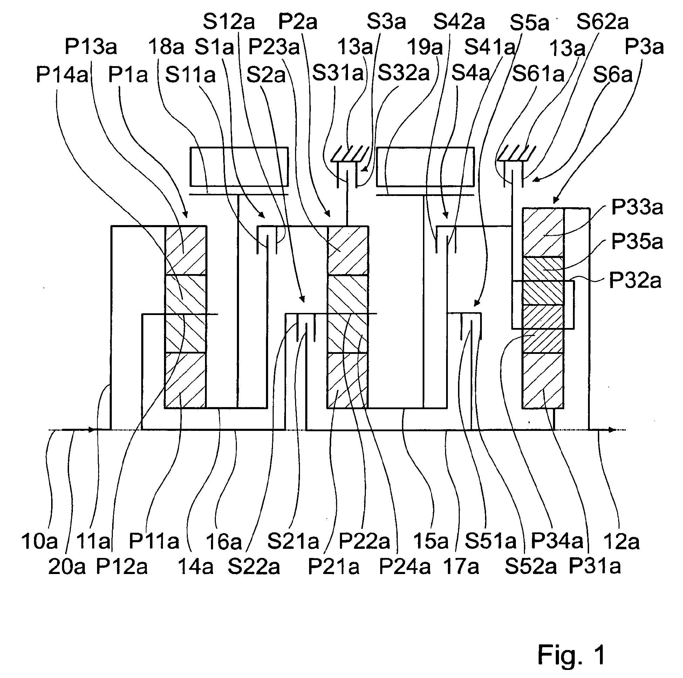

Figur 1 zeigt ein erfindungsgemäßes Mehrstufengetriebe, das als ein Kraftfahrzeuggetriebe ausgestaltet ist. Das Mehrstufengetriebe weist genau drei Planetenradgetriebe P1a, P2a, P3a auf. Das erste Planetenradgetriebe P1a, das zweite Planetenradgetriebe P2a und das dritte Planetenradgetriebe P3a sind in dem dargestellten Ausführungsbeispiel entlang einer Hauptrotationsachse 10a hintereinander angeordnet. Das erste Planetenradgetriebe P1a und das zweite Planetenradgetriebe P2a des Mehrstufengetriebes weisen in dieser Ausgestaltung einen Einfachplanetenradsatz auf. Das dritte Planetenradgetriebe P3a weist einen Doppelplanetenradsatz auf.

Das Mehrstufengetriebe ist zur Anbindung von zwei Elektromotoren EM1a, EM2a vorgesehen. In Verbindung mit den zwei Elektromotoren EM1a, EM2a und einem Verbrennungsmotor bildet das Mehrstufengetriebe ein Hybridantriebsmodul mit unterschiedlichen Fahrmodi aus. Zur Schaltung von unterschiedlichen Getriebegängen und Fahrmodi, in denen Leistungsflüsse aus dem Verbrennungsmotor und/oder den Elektromotoren EM1a, EM2a unterschiedlich kombiniert oder geleitet werden, weist das Mehrstufengetriebe genau sechs Schalteinheiten S1 a, S2a, S3a, S4a, S5a, S6a auf. Diese sind zumindest konstruktiv dazu vorgesehen, zumindest sechs verbrennungsmotorische Vorwärtsgetriebegänge V1a, V2a, V3a, V4a, V5a, V6a zu schalten. Zudem ist mittels der Schalteinheiten S1a, S2a, S3a, S4a, S5a, S6a ein zusätzlicher dritter Vorwärtsgetriebegang V3'a schaltbar. Zudem werden in der beispielhaft beschriebenen Betriebsstrategie mittels der Schalteinheiten S1a, S2a, S3a, S4a, S5a, S6a vier elektromotorische Vorwärtsgetriebegänge E1a, E2a, E3a, E4a und vier leistungsverzweigte EVT-Fahrbereiche EVT1a, EVT2a, EVT3a, EVT4a geschaltet. Ein Rückwärtsgetriebegang ist mittels eines der EVT-Fahrbereiche EVT1a, EVT2a, EVT3a, EVT4a oder mittels eines der elektromotorischen Vorwärtsgetriebegänge E1a, E2a, E3a, E4a darstellbar.

Die verbrennungsmotorischen Vorwärtsgetriebegänge V1a, V2a, V3a, V4a, V5a, V6a sind grundsätzlich untereinander zumindest sequentiell vollständig lastschaltbar. Von einem der verbrennungsmotorischen Vorwärtsgetriebegänge V1a, V2a, V3a, V4a, V5a, V6a kann lastunterbrechungsfrei in den benachbarten verbrennungsmotorischen Vorwärtsgetriebegang V1a, V2a, V3a, V4a, V5a, V6a geschaltet werden.

Die elektromotorischen Vorwärtsgetriebegänge E1a, E2a, E3a, E4a sind grundsätzlich lediglich teilweise sequentiell lastschaltbar. Dabei sind insbesondere der erste elektromotorische Vorwärtsgetriebegang E1a und der zweite elektromotorische Vorwärtsgetriebegang E2a sowie der dritte elektromotorische Vorwärtsgetriebegang E3a und der vierte elektromotorische Vorwärtsgetriebegang E4a untereinander lastschaltbar. Zudem sind der erste elektromotorische Vorwärtsgetriebegang E1a und der dritte elektromotorische Vorwärtsgetriebegang E3a sowie der zweite elektromotorische Vorwärtsgetriebegang E3a und der vierte elektromotorische Vorwärtsgetriebegang E4a untereinander lastschaltbar.

Die EVT-Fahrbereiche EVT1a, EVT2a, EVT3a, EVT4a sind grundsätzlich untereinander zumindest sequentiell vollständig lastschaltbar. Von einem der EVT-Fahrbereiche EVT1a, EVT2a, EVT3a, EVT4a kann lastunterbrechungsfrei in den benachbarten EVT-Fahrbereich EVT1a, EVT2a, EVT3a, EVT4a geschaltet werden.

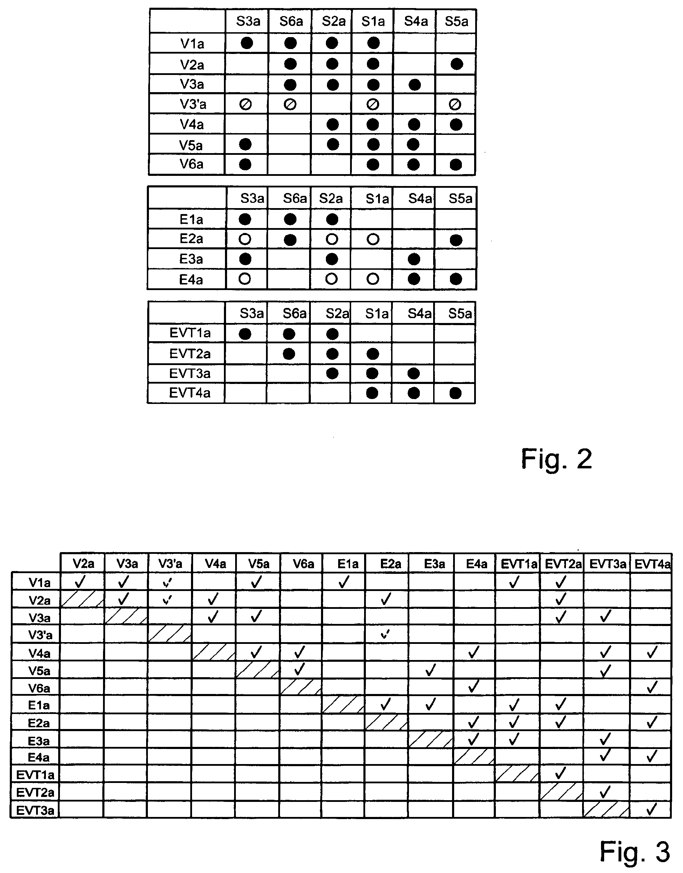

Zudem sind grundsätzlich auch Lastschaltungen zwischen den verbrennungsmotorischen Vorwärtsgetriebegängen V1 a, V2a, V3a, V4a, V5a, V6a, den elektromotorischen Vorwärtsgetriebegängen E1a, E2a, E3a, E4a und den EVT-Fahrbereichen EVT1a, EVT2a, EVT3a, EVT4a möglich. Beispielsweise sind der erste verbrennungsmotorische Vorwärtsgetriebegang V1 a, der erste elektromotorische Vorwärtsgetriebegang E1 a und die beiden EVT-Fahrbereiche EVT1a, EVT2a untereinander lastschaltbar. Der zweite verbrennungsmotorische Vorwärtsgetriebegang V2a, der zweite elektromotorische Vorwärtsgetriebegang E2a und der EVT-Fahrbereich EVT2a sind untereinander lastschaltbar. Der dritte verbrennungsmotorische Vorwärtsgetriebegang V3a und die EVT-Fahrbereiche EVT2a, EVT3a sind untereinander lastschaltbar. Der vierte verbrennungsmotorische Vorwärtsgetriebegang V4a, der vierte elektromotorische Vorwärtsgetriebegang E4a und die EVT-Fahrbereiche EVT3a, EVT4a sind untereinander lastschaltbar. Der fünfte verbrennungsmotorische Vorwärtsgetriebegang V5a, der dritte elektromotorische Vorwärtsgetriebegang E3a und der EVT-Fahrbereich EVT3a sind untereinander lastschaltbar. Der sechste verbrennungsmotorische Vorwärtsgetriebegang V6a, der vierte elektromotorische Vorwärtsgetriebegang E4a und der EVT-Fahrbereich EVT4a sind untereinander lastschaltbar. Der erste elektromotorische Vorwärtsgetriebegang E1 a und die EVT-Fahrbereiche EVT1 a, EVT2a sind untereinander lastschaltbar. Der zweite elektromotorische Vorwärtsgetriebegang E2a und die EVT-Fahrbereiche EVT1a, EVT2a, EVT4a sind untereinander lastschaltbar. Der dritte elektromotorische Vorwärtsgetriebegang E3a und die EVT-Fahrbereiche EVT1a, EVT3a sind untereinander lastschaltbar. Der vierte elektromotorische Vorwärtsgetriebegang E4a und die EVT-Fahrbereiche EVT3a, EVT4a sind untereinander lastschaltbar. Weitere mögliche Lastschaltungen, insbesondere Lastschaltungen jeweils zwischen den verbrennungsmotorischen Vorwärtsgetriebegängen V1 a, V2a, V3a, V4a, V5a, V6a, den elektromotorischen Vorwärtsgetriebegängen E1a, E2a, E3a, E4a und den EVT-Fahrbereichen EVT1a, EVT2a, EVT3a, EVT4a, ergeben sich aus der in Figur 3 dargestellten Schaltflexibilität und/oder dem in Figur 1 dargestellten Getriebeschema.

Das Mehrstufengetriebe ist dazu vorgesehen, den nicht näher dargestellten Verbrennungsmotor und die Elektromotoren EM1a, EM2a mit nicht näher dargestellten Antriebsrädern des Kraftfahrzeugs zu verbinden. Mittels der Mehrstufengetriebe kann ein Übersetzungsverhältnis zwischen dem Verbrennungsmotor, den Elektromotoren EM1a, EM2a und den Antriebsrädern eingestellt werden.

Das Mehrstufengetriebe weist eine Getriebeeingangswelle 11a auf, die dazu vorgesehen ist, ein Antriebsmoment in das Mehrstufengetriebe einzuleiten. Der Getriebeeingangswelle 11a kann grundsätzlich ein nicht näher dargestelltes Modul vorgeschaltet sein, das insbesondere dazu vorgesehen sein soll, eine Anfahrfunktionalität bereitzustellen und/oder die Brennkraftmaschine abzutrennen. Als ein vorgeschaltetes Modul ist beispielsweise ein Wandler, eine nasse Anfahrkupplung und/oder eine einfache Trennkupplung denkbar. In der dargestellten Ausgestaltung wird jedoch auf ein vorgeschaltetes Modul verzichtet.

Zur Anbindung des Verbrennungsmotors umfasst das Mehrstufengetriebe ein Kurbelwellenanbindungselement 20a, das zur permanent drehfesten Verbindung mit einer Kurbelwelle des Verbrennungsmotors vorgesehen ist. Die Getriebeeingangswelle 11a ist permanent drehfest mit der Kurbelwelle des Verbrennungsmotors verbunden. Zur Anbindung der Elektromotoren EM1a, EM2a umfasst das Mehrstufengetriebe zwei Rotorelemente 18a, 19a, die in dem dargestellten Ausführungsbeispiel jeweils permanent drehfest mit einem Rotor des entsprechenden Elektromotors EM1a, EM2a verbunden sind oder zumindest teilweise einstückig mit dem Rotor ausgebildet sind. Die Rotorelemente 18a, 19a können auch abkoppelbar ausgestaltet sein. Grundsätzlich ist es weiter denkbar, dass an das Mehrstufengetriebe lediglich ein einzelner Elektromotor angebunden ist.

Weiter weist das Mehrstufengetriebe eine Getriebeausgangswelle 12a auf, die dazu vorgesehen ist, ein Antriebsmoment aus dem Mehrstufengetriebe auszuleiten. Die Getriebeausgangswelle 12a ist dazu vorgesehen, mit den Antriebsrädern des Kraftfahrzeugs verbunden zu werden. Der Getriebeausgangswelle 12a kann ein nicht näher dargestelltes Modul nachgeschaltet sein, mittels dessen das aus dem Mehrstufengetriebe ausgeleitete Moment auf die Antriebsräder verteilt werden kann, wie beispielsweise ein Differentialgetriebe, das für einen Drehzahlausgleich zwischen den Antriebsrädern vorgesehen ist, oder ein Allradantriebsmodul, das das Antriebsmoment auf zwei verschiedene Antriebsachsen verteilt. Die Getriebeeingangswelle 11 a und die Getriebeausgangswelle 12a können grundsätzlich beliebig zueinander angeordnet sein. Dabei ist insbesondere eine koaxiale Anordnung auf gegenüberliegenden Seiten des Mehrstufengetriebes vorteilhaft. Aber auch eine Anordnung auf der gleichen Seite des Mehrstufengetriebes ist denkbar. Zudem kann durch eine Umordnung das Mehrstufengetriebe für einen Front-Quer-Einbau vorgesehen werden, bei dem ein Abtrieb zwischen den einzelnen Planetenradgetrieben P1a, P2a, P3a liegt.

Das erste Planetenradgetriebe P1a ist eingangsseitig angeordnet. Das erste Planetenradgetriebe P1a weist einen Einfachplanetenradsatz auf. Der Einfachplanetenradsatz umfasst ein erstes Sonnenrad P11a, ein erstes Hohlrad P13a und einen ersten Planetenradträger P12a. Der Planetenradträger P12a führt Planetenräder P14a auf einer Kreisbahn. Die Planetenräder P14a kämmen mit dem Sonnenrad P11a und mit dem Hohlrad P13a. Die Planetenräder P14a sind drehbar auf dem Planetenradträger P12a gelagert.

Das zweite Planetenradgetriebe P2a ist mittig angeordnet. Das zweite Planetenradgetriebe P2a weist einen Einfachplanetenradsatz auf. Der Einfachplanetenradsatz umfasst ein zweites Sonnenrad P21a, ein zweites Hohlrad P23a und einen zweiten Planetenradträger P22a. Der Planetenradträger P22a führt Planetenräder P24a auf einer Kreisbahn. Die Planetenräder P24a kämmen mit dem Sonnenrad P21a und mit dem Hohlrad P23a. Die Planetenräder P24a sind drehbar auf dem Planetenradträger P22a gelagert.

Das dritte Planetenradgetriebe P3a ist ausgangsseitig angeordnet. Das dritte Planetenradgetriebe P3a weist einen Doppelplanetenradsatz auf. Der Doppelplanetenradsatz umfasst ein drittes Sonnenrad P31a, ein drittes Hohlrad P33a und einen dritten Planetenradträger P32a. Der Planetenradträger P32a führt Planetenräder P34a, P35a auf einer Kreisbahn. Die paarweise angeordneten Planetenräder P34a, P35 kämmen jeweils miteinander. Das innere Planetenrad P34a kämmt zudem mit dem Sonnenrad P31a. Das äußere Planetenrad P35a kämmt zudem mit dem Hohlrad P33a. Die Planetenräder P34a, P35a sind drehbar auf dem Planetenradträger P32a gelagert, der für die zwei miteinander kämmenden Planetenräder P34a, P35a vorgesehen ist.

Die vier Schalteinheiten S1a, S2a, S4a, S5a sind als Kupplungen ausgebildet. Sie weisen jeweils ein erstes drehbares Kopplungselement S11a, S21a, S41a, S51a und ein zweites drehbares Kopplungselement S12a, S22a, S42a, S52a auf. Die vier Schalteinheiten S1a, S2a, S4a, S5a sind jeweils dazu vorgesehen, ihre beiden Kopplungselemente S11a, S12a, S31a, S32a, S41a, S42a drehfest miteinander zu verbinden.

Die zwei Schalteinheiten S3a, S6a sind als Bremsen ausgebildet. Sie weisen jeweils nur ein drehbares Kopplungselement S31a, S61a auf. Ein zweites Kopplungselement S32a, S62a der Schalteinheiten S3a, S6a ist permanent drehfest mit einem Getriebegehäuse 13a verbunden. Die Schalteinheiten S3a, S6a sind dazu vorgesehen, ihr drehbares Kopplungselement S31a, S61a zu fixieren, indem sie es drehfest mit dem Getriebegehäuse 13a verbinden.

Die Schalteinheiten S3a, S4a, S5a sind reibschlüssig ausgeführt. Sie weisen jeweils ein nicht näher dargestelltes Kupplungslamellenpaket auf. Die Schalteinheiten S2a, S6a sind rein formschlüssig ausgeführt. Zudem ist auch die Schalteinheit S1a rein formschlüssig ausgeführt. Die Schalteinheiten S1a, S2a, S6a umfassen eine nicht näher dargestellte Schiebemuffe zur Herstellung einer drehfesten, formschlüssigen Verbindung. Die drei Schalteinheiten S1a, S2a, S6a sind dabei unsynchronisiert ausgeführt. Grundsätzlich können die Schalteinheiten S1a, S2a, S6a aber auch reibschlüssig oder synchronisiert ausgeführt werden.

In dem dargestellten Ausführungsbeispiel sind die Schalteinheiten S1a, S2a in axialer Richtung zwischen dem ersten Planetenradgetriebe P1a und dem zweiten Planetenradgetriebe P2a angeordnet. Die Schalteinheit S3a ist in Höhe des zweiten Planetenradgetriebes P2a angeordnet. Die Schalteinheiten S4a, S5a sind zwischen dem zweiten Planetenradgetriebe P2a und dem dritten Planetenradgetriebe P3a angeordnet. Die Schalteinheit S6a ist in Höhe des dritten Planetenradgetriebes P3a angeordnet. Die Schalteinheiten S1a, S3a, S4a, S6a sind außenliegend ausgeführt. Die Schalteinheiten S2a, S5a sind innenliegend ausgeführt.

Die Getriebeeingangswelle 11a ist drehfest mit dem ersten Hohlrad P13a verbunden. Die Getriebeausgangswelle 12a ist drehfest mit dem dritten Hohlrad P33a verbunden. Zudem umfasst das Mehrstufengetriebe vier Zwischenwellen 14a, 15a, 16a, 17a, mittels derer die Planetenradgetriebe P1a, P2a, P3a und die Schalteinheiten S1a, S2a, S3a, S4a, S5a, S6a wirkungsmäßig miteinander verbunden bzw. verbindbar sind.

Die Getriebeeingangswelle 11a ist lediglich mit dem ersten Hohlrad P13a permanent drehfest verbunden. Die erste Zwischenwelle 14a verbindet das erste Sonnenrad P11a, das Rotorelement 18a für den ersten Elektromotor EM1a und das erste Kopplungselement S11a der Schalteinheit S1a permanent drehfest miteinander. Die zweite Zwischenwelle 15a verbindet das zweite Sonnenrad P21a, das Rotorelement 19a für den zweiten Elektromotor EM2a, das erste Kopplungselement S41 a der Schalteinheit S4a und das zweite Kopplungselement S52a der Schalteinheit S5a permanent drehfest miteinander. Die dritte Zwischenwelle 16a verbindet den ersten Planetenradträger P12a, den zweiten Planetenradträger P22a und das zweite Kopplungselement S22a der Schalteinheit S2a permanent drehfest miteinander. Die vierte Zwischenwelle 17a verbindet das erste Kopplungselement S21 a der Schalteinheit S2a, das erste Kopplungselement S51a der Schalteinheit S5a und das dritte Sonnenrad P31a permanent drehfest miteinander. Die Getriebeausgangswelle 12a ist lediglich mit dem dritten Hohlrad P33a permanent drehfest verbunden. Das zweite Kopplungselement S12a der Schalteinheit S1a und das erste Kopplungselement S31a der Schalteinheit S3a sind direkt permanent drehfest an das zweite Hohlrad P23a angebunden. Das zweite Kopplungselement S42a der Schalteinheit S4a und das erste Kopplungselement S61a der Schalteinheit S6a sind direkt permanent drehfest an den dritten Planetenradträger P32a angebunden.

Die Getriebeeingangswelle 11a ist eingangsseitig an das erste Hohlrad P13a angebunden. Die erste Zwischenwelle 14a ist zur Anbindung des Rotorelements 18a für den ersten Elektromotor EM1a und des Kopplungselements S11a axial zwischen dem ersten Planetenradgetriebe P1a und dem zweiten Planetenradgetriebe P2a radial nach außen geführt. Die zweite Zwischenwelle 15a ist zur Anbindung des Rotorelements 19a für den zweiten Elektromotor EM2a und des Kopplungselements S41a axial zwischen dem zweiten Planetenradgetriebe P2a und dem dritten Planetenradgetriebe P3a radial nach außen geführt. Die dritte Zwischenwelle 16a ist eingangsseitig des ersten Planetenradgetriebes P1a an den ersten Planetenradträger P12a angebunden und durchsetzt zur Anbindung des Kopplungselements S22a und des zweiten Planetenradträgers P22a das erste Planetenradgetriebe P1a. Die vierte Zwischenwelle 17a, an die das Kopplungselement S21a angebunden ist, durchsetzt das zweite Planetenradgetriebe P2a. Zur Anbindung des Kopplungselements S51 a ist die vierte Zischenwelle 17a axial zwischen dem dritten Planetenradgetriebe P3a und der Zwischenwelle 15a radial nach außen geführt. Die Getriebeausgangswelle 12a ist ausgangsseitig des dritten Planetenradgetriebes P3a an das dritte Hohlrad P33a angebunden.

Die verbrennungsmotorischen Vorwärtsgetriebegänge V1a, V2a, V3a, V3'a, V4a, V5a, V6a, die elektromotorischen Vorwärtsgetriebegänge E1a, E2a, E3a, E4a und die EVT-Fahrbereiche EVT1a, EVT2a, EVT3a, EVT4a werden mittels der Schalteinheiten S1a, S2a, S3a, S4a, S5a, S6a geschaltet (vgl. Figur 2). Für die verbrennungsmotorischen Vorwärtsgetriebegänge V1a, V2a, V3a, V3'a, V4a, V5a, V6a werden jeweils vier der insgesamt sechs Schalteinheiten S1a, S2a, S3a, S4a, S5a, S6a geschlossen. Die Schalteinheit S1a ist dabei in sämtlichen verbrennungsmotorischen Vorwärtsgetriebegänge V1a, V2a, V3a, V3'a, V4a, V5a, V6a geschlossen. Für die elektromotorischen Vorwärtsgetriebegänge E1a, E3a werden jeweils drei der insgesamt sechs Schalteinheiten S1a, S2a, S3a, S4a, S5a, S6a geschlossen. Die elektrischen Vorwärtsgetriebegänge E2a, E4a sind durch Schließen von zwei der sechs Schalteinheiten S1a, S2a, S3a, S4a, S5a, S6a bildbar, wobei in den elektromotorischen Vorwärtsgetriebegängen E2a, E4a zusätzlich eine oder mehrere der Schalteinheiten S1a, S2a, S3a geschlossen werden können. Für die EVT-Fahrbereiche EVT1 a, EVT2a, EVT3a, EVT4a werden jeweils drei der sechs Schalteinheiten S1a, S2a, S3a, S4a, S5a, S6a geschlossen. Bei einem Schaltvorgang unter Last wird jeweils genau eine der Schalteinheiten S1a, S2a, S3a, S4a, S5a, S6a geöffnet, während gleichzeitig genau eine der anderen Schalteinheiten S1a, S2a, S3a, S4a, S5a, S6a geschlossen wird.

In einem geschlossenen Zustand verbindet die Schalteinheit S1a das erste Sonnenrad P11a und das zweite Hohlrad P23a drehfest miteinander. Die Schalteinheit S2a verbindet in einem geschlossenen Zustand den ersten Planetenradträger P12a, den zweiten Planetenradträger P22a und das dritte Sonnenrad P31a drehfest miteinander. Die Schalteinheit S3a verbindet in einem geschlossenen Zustand das zweite Hohlrad P23a drehfest mit dem Getriebegehäuse 13a. Die Schalteinheit S4a verbindet in einem geschlossenen Zustand das zweite Sonnenrad P21a und den dritten Planetenradträger P32a drehfest miteinander. Die Schalteinheit S5a verbindet in einem geschlossenen Zustand das zweite Sonnenrad P21a und das dritte Sonnenrad P31a drehfest miteinander. Die Schalteinheit S6a verbindet in geschlossenem Zustand den dritten Planetenradträger P32a drehfest mit dem Getriebegehäuse 13a.

Sind die Schalteinheiten S1a, S3a gleichzeitig geschlossen, ist das erste Sonnenrad P11a über die Schalteinheit S1a, S3a drehfest mit dem Getriebegehäuse 13a verbunden. Sind die Schalteinheiten S2a, S5a gleichzeitig geschlossen, sind das zweite Sonnenrad P21a und der zweite Planetenradträger P22a drehfest miteinander verbunden, wodurch das zweite Planetenradgetriebe P2a verblockt ist. Sind die Schalteinheiten S4a, S5a gleichzeitig geschlossen, sind der dritte Planetenradträger P32a und das dritte Sonnenrad P31 a drehfest miteinander verbunden, wodurch das dritte Planetenradgetriebe P3a verblockt ist. Sind die Schalteinheiten S4a, S6a gleichzeitig geschlossen, ist das zweite Sonnenrad P21 a über die Schalteinheiten S4a, S6a drehfest mit dem Getriebegehäuse 13a verbunden.

In den im Folgenden beschrieben verbrennungsmotorischen Vorwärtsgetriebegänge V1a, V2a, V3a, V3'a, V4a, V5a, V6a, den elektromotorischen Vorwärtsgetriebegängen E1 a, E2a, E3a, E4a und den EVT-Fahrbereichen EVT1a, EVT2a, EVT3a, EVT4a sind Drehzahlen und Leistungsflüsse beispielhaft für einen Betriebspunkt beschrieben. Insbesondere in den EVT-Fahrbereichen EVT1a, EVT2a, EVT3a, EVT4a können sich in Abhängigkeit von einer Leistung, die von den Elektromotoren EM1a, EM2a abgegeben oder aufgenommen wird, grundsätzlich auch andere Drehzahlen oder Leistungsflüsse einstellen.

In den verbrennungsmotorischen Vorwärtsgetriebegängen V1a, V2a, V3a, V3'a, V4a, V5a, V6a sind die Elektromotoren EM1a, EM2a für eine Boostfunktion und eine Rekuperation vorgesehen. Weiter ist eine rein verbrennungsmotorische Fahrt möglich.

Der erste verbrennungsmotorische Vorwärtsgetriebegang V1a wird gebildet, indem die vier Schalteinheiten S1a, S2a, S3a, S6a geschlossen werden. Das erste Hohlrad P13a rotiert mit einer gleichen Drehzahl wie die Getriebeeingangswelle 11a. Das erste Sonnenrad P11 a ist fixiert. Eine Drehzahl des ersten Planetenradträgers P12a ist somit durch die Drehzahl der Getriebeeingangswelle 11a und das Standübersetzungsverhältnis des ersten Planetenradgetriebes P1a definiert. Das dritte Sonnenrad P31 a weist die gleiche Drehzahl auf wie der erste Planetenradträger P12a. Der dritte Planetenradträger P32a ist fixiert. Eine Drehzahl des dritten Hohlrads P33a ist somit durch die Drehzahl des ersten Planetenradträgers P12a und das Standübersetzungsverhältnis des dritten Planetenradgetriebes P3a definiert. Die Drehzahl der Getriebeausgangswelle 12a ist damit durch die Standübersetzungsverhältnisse der beiden Planetenradgetriebe P1a, P3a definiert. Ein Leistungsfluss für den ersten verbrennungsmotorischen Vorwärtsgetriebegang V1 a wird über das erste Planetenradgetriebe P1a eingeleitet und über das dritte Planetenradgetriebe P3a ausgeleitet.

Der zweite verbrennungsmotorische Vorwärtsgetriebegang V2a wird gebildet, indem die vier Schalteinheiten S1a, S2a, S5a, S6a geschlossen werden. Durch die Schalteinheiten S2a, S5a ist der zweite Planetenradträger P22a drehfest mit dem zweiten Sonnenrad P21a verbunden. Das zweite Planetenradgetriebe P2a ist somit verblockt. Das erste Sonnenrad P11 a ist drehfest mit dem zweiten Hohlrad P23a verbunden. Der erste Planetenradträger P12a ist drehfest mit dem zweiten Planetenradträger P22a verbunden. Das erste Planetenradgetriebe P1a ist somit ebenfalls verblockt. Das dritte Sonnenrad P31 a weist somit eine gleiche Drehzahl auf wie die Getriebeeingangswelle 11 a. Der dritte Planetenradträger P32a ist fixiert. Ein Drehzahlverhältnis zwischen dem dritten Sonnenrad P31a und dem Hohlrad P33a und damit die Drehzahl der Getriebeausgangswelle 12a sind somit durch das Standübersetzungsverhältnis des dritten Planetenradgetriebes P3a definiert. Ein Leistungsfluss für den zweiten verbrennungsmotorischen Vorwärtsgetriebegang V2a wird über das erste Planetenradgetriebe P1 a eingeleitet und auf das zweite Planetenradgetriebe P2a weitergeleitet. Der in das zweite Planetenradgetriebe P2a eingeleitete Leistungsfluss wird teilweise auf das erste Planetenradgetriebe P1a rückgekoppelt und teilweise auf das dritte Planetenradgetriebe P3a weitergeleitet. Über das dritte Planetenradgetriebe P3a wird der Leistungsfluss ausgeleitet.

Der dritte verbrennungsmotorische Vorwärtsgetriebegang V3a wird gebildet, indem die vier Schalteinheiten S1a, S2a, S4a, S6a geschlossen werden. Das erste Sonnenrad P11a ist drehfest mit dem zweiten Hohlrad P23a verbunden. Der erste Planetenradträger P12a ist drehfest mit dem zweiten Planetenradträger P22a verbunden. Durch die Schalteinheiten S4a, S6a ist das zweite Sonnenrad P21a drehfest mit dem Getriebegehäuse 13a verbunden. Ein Drehzahlverhältnis zwischen dem zweiten Planetenradträger P22a und dem zweiten Hohlrad P23a ist somit durch das Standübersetzungsverhältnis des zweiten Planetenradgetriebes P2a definiert. Der erste Planetenradträger P12a und das erste Sonnenrad P11a weisen das gleiche Drehzahlverhältnis auf. Das erste Hohlrad P13a weist eine gleiche Drehzahl auf wie die Getriebeeingangswelle 11a. Die Drehzahl des dritten Sonnenrads P31a, das drehfest mit dem ersten Planetenradträger P12a verbunden ist, ist somit durch das Drehzahlverhältnis zwischen dem zweiten Planetenradträger P22a und dem zweiten Hohlrad P23a definiert. Der dritte Planetenradträger P32a ist fixiert. Ein Drehzahlverhältnis zwischen dem dritten Sonnenrad P31 a und dem dritten Hohlrad P33a ist somit durch das Standübersetzungsverhältnis des dritten Planetenradgetriebes P3a definiert. Die Drehzahl der Getriebeausgangswelle 12a ist somit durch das Standübersetzungsverhältnis des dritten Planetenradgetriebes P3a definiert und das Drehzahlverhältnis zwischen dem zweiten Planetenradträger P22a und dem zweiten Hohlrad P23a definiert. Ein Leistungsfluss für den dritten verbrennungsmotorischen Vorwärtsgetriebegang V3a wird über das erste Planetenradgetriebe P1a eingeleitet und auf das zweite Planetenradgetriebe P2a weitergeleitet. Der in das zweite Planetenradgetriebe P2a eingeleitete Leistungsfluss wird teilweise auf das erste Planetenradgetriebe P1a rückgekoppelt und teilweise auf das dritte Planetenradgetriebe P3a weitergeleitet. Über das dritte Planetenradgetriebe P3a wird der Leistungsfluss ausgeleitet.

Der zusätzliche verbrennungsmotorische Vorwärtsgetriebegang V3'a weist ein Übersetzungsverhältnis auf, das zwischen einem Übersetzungsverhältnis des dritten verbrennungsmotorischen Vorwärtsgetriebegangs V3a und einem Übersetzungsverhältnis des vierten verbrennungsmotorischen Vorwärtsgetriebegangs V4a liegt. Der zusätzliche verbrennungsmotorische Vorwärtsgetriebegang V3'a wird gebildet, indem die vier Schalteinheiten S1a, S3a, S5a, S6a geschlossen werden. Das erste Hohlrad P13a rotiert mit einer gleichen Drehzahl wie die Getriebeeingangswelle 11a. Das erste Sonnenrad P11a ist fixiert. Eine Drehzahl des ersten Planetenradträgers P12a ist somit durch die Drehzahl der Getriebeeingangswelle 11a und das Standübersetzungsverhältnis des ersten Planetenradgetriebes P1a definiert. Der zweite Planetenradträger P22a rotiert mit der gleichen Drehzahl wie der erste Planetenradträger P12a. Das zweite Hohlrad P23a ist fixiert. Eine Drehzahl des zweiten Sonnenrads P21a ist somit durch das Standübersetzungsverhältnis des zweiten Planetenradgetriebes P2a und die Drehzahl des ersten Planetenradträgers P12a definiert. Das dritte Sonnenrad P31 a rotiert mit der gleichen Drehzahl wie das zweite Sonnenrad P21 a. Der dritte Planetenradträger P32a ist fixiert. Eine Drehzahl des dritten Hohlrads P33a ist somit durch das Standübersetzungsverhältnis des dritten Planetenradgetriebes P3a und die Drehzahl des zweiten Sonnenrads P21a definiert. Die Drehzahl der Getriebeausgangswelle 12a ist damit durch die Standübersetzungsverhältnisse der drei Planetenradgetriebe P1a, P2a, P3a definiert. Ein Leistungsfluss für den zusätzlichen verbrennungsmotorischen Vorwärtsgetriebegang V3'a wird über das erste Planetenradgetriebe P1a eingeleitet, an das zweite Planetenradgetriebe P2a weitergeleitet und über das dritte Planetenradgetriebe P3a ausgeleitet.

Der vierte verbrennungsmotorische Vorwärtsgetriebegang V4a wird gebildet, indem die vier Schalteinheiten S1a, S2a, S4a, S5a geschlossen werden. Durch die Schalteinheiten S2a, S5a ist der zweite Planetenradträger P22a drehfest mit dem zweiten Sonnenrad P21 a verbunden. Das zweite Planetenradgetriebe P2a ist somit verblockt. Das erste Sonnenrad P11 a ist drehfest mit dem zweiten Hohlrad P23a verbunden. Der erste Planetenradträger P12a ist drehfest mit dem zweiten Planetenradträger P22a verbunden. Das erste Planetenradgetriebe P1a ist somit ebenfalls verblockt. Über die Schalteinheiten S4a, S5a ist das dritte Sonnenrad P31a drehfest mit dem dritten Planetenradträger P32a verbunden. Das dritte Planetenradgetriebe P3a ist ebenfalls verblockt. Die Getriebeausgangswelle 12a weist somit eine gleiche Drehzahl auf wie die Getriebeeingangswelle 11a. Ein Leistungsfluss für den zweiten verbrennungsmotorischen Vorwärtsgetriebegang V2a wird über das erste Planetenradgetriebe P1a eingeleitet und auf das zweite Planetenradgetriebe P2a weitergeleitet. Der in das zweite Planetenradgetriebe P2a eingeleitete Leistungsfluss wird teilweise auf das erste Planetenradgetriebe P1a rückgekoppelt und teilweise auf das dritte Planetenradgetriebe P3a weitergeleitet. Über das dritte Planetenradgetriebe P3a wird der Leistungsfluss ausgeleitet.

Der fünfte verbrennungsmotorische Vorwärtsgetriebegang V5a wird gebildet, indem die vier Schalteinheiten S1a, S2a, S3a, S4a geschlossen werden. Das erste Hohlrad P13a rotiert mit einer gleichen Drehzahl wie die Getriebeeingangswelle 11 a. Das erste Sonnenrad P11a ist fixiert. Eine Drehzahl des ersten Planetenradträgers P12a ist somit durch die Drehzahl der Getriebeeingangswelle 11a und das Standübersetzungsverhältnis des ersten Planetenradgetriebes P1a definiert. Der zweite Planetenradträger P22a rotiert mit der gleichen Drehzahl wie der erste Planetenradträger P12a. Das zweite Hohlrad P23a ist fixiert. Eine Drehzahl des zweiten Sonnenrads P21a ist somit durch die Drehzahl des ersten Planetenradträgers P12a und das Standübersetzungsverhältnis des zweiten Planetenradgetriebes P2a definiert. Der dritte Planetenradträger P32a weist die gleiche Drehzahl auf wie das zweite Sonnenrad P21a. Das dritte Sonnenrad P31a weist die gleiche Drehzahl auf wie der erste Planetenradträger P12a. Eine Drehzahl des dritten Hohlrads P33a und damit die Drehzahl der Getriebeausgangswelle 12a ist somit durch die Drehzahl des ersten Planetenradträgers P12a und die Drehzahl des zweiten Sonnenrads P21 a definiert. Ein Leistungsfluss für den fünften verbrennungsmotorischen Vorwärtsgetriebegang V5a wird über das erste Planetenradgetriebe P1a eingeleitet und auf das zweite Planetenradgetriebe P2a und das dritte Planetenradgetriebe P3a aufgesplittet. Der in das zweite Planetenradgetriebe P2a eingeleitete Leistungsfluss wird an das dritte Planetenradgetriebe P3a weitergeleitet, wo die Kraftflüsse aus dem ersten Planetenradgetriebe P1a und dem zweiten Planetenradgetriebe P2a wieder kombiniert und ausgeleitet werden.

Der sechste verbrennungsmotorische Vorwärtsgetriebegang V6a wird gebildet, indem die vier Schalteinheiten S1a, S3a, S4a, S5a geschlossen werden. Das erste Hohlrad P13a rotiert mit einer gleichen Drehzahl wie die Getriebeeingangswelle 11 a. Das erste Sonnenrad P11a ist fixiert. Eine Drehzahl des ersten Planetenradträgers P12a ist somit durch die Drehzahl der Getriebeeingangswelle 11a und das Standübersetzungsverhältnis des ersten Planetenradgetriebes P1a definiert. Der zweite Planetenradträger P22a rotiert mit der gleichen Drehzahl wie der erste Planetenradträger P12a. Das zweite Hohlrad P23a ist fixiert. Eine Drehzahl des zweiten Sonnenrads P21a ist somit durch die Drehzahl des ersten Planetenradträgers P12a und das Standübersetzungsverhältnis des zweiten Planetenradgetriebes P2a definiert. Das dritte Planetenradgetriebe P3a ist verblockt. Der dritte Planetenradträger P32a und das dritte Sonnenrad P31 a weisen die gleiche Drehzahl auf wie das zweite Sonnenrad P21a. Das dritte Hohlrad P33a, das drehfest mit der Getriebeausgangswelle 12a verbunden ist, weist somit ebenfalls die gleiche Drehzahl auf wie das zweite Sonnenrad P21a. Die Drehzahl der Getriebeausgangswelle 12a ist somit durch die Drehzahl des Standübersetzungsverhältnisses der ersten beiden Planetenradgetriebe P1a, P2a definiert. Ein Leistungsfluss für den sechsten verbrennungsmotorischen Vorwärtsgetriebegang V6a wird über das erste Planetenradgetriebe P1a eingeleitet und auf das zweite Planetenradgetriebe P2a weitergeleitet. Der in das zweite Planetenradgetriebe P2a eingeleitete Leistungsfluss wird über das dritte Planetenradgetriebe P3a ausgeleitet.

In den elektrischen Vorwärtsgetriebegängen E1a, E2a, E3a, E4a ist der zweite Elektromotor EM2a als Antriebsmotor vorgesehen. Um in den elektromotorischen Vorwärtsgetriebegängen E1a, E2a, E3a, E4a den ersten Elektromotor EM1a für eine Boost-Funktion zu nutzen, ist es notwendig, den Verbrennungsmotor von dem Mehrstufengetriebe zu entkoppeln. In einer nicht näher dargestellten Ausgestaltung kann für eine Boost-Funktion in den elektromotorischen Vorwärtsgetriebegängen E1a, E2a, E3a, E4a eine Trennkupplung zwischen der Getriebeeingangswelle 11 a und dem Kurbelwellenanbindungselement 20a vorgesehen werden.

Weiter ist in den elektromotorischen Vorwärtsgetriebegängen E1a, E2a, E3a ein Start des Verbrennungsmotors möglich, insbesondere auch in der Ausgestaltung ohne Trennkupplung. Der Start des Verbrennungsmotors kann in den elektromotorischen Vorwärtsgetriebegängen E1a, E2a, E3a, E4a rückwirkungsfrei erfolgen, indem lediglich ein Teil der von dem oder den Elektromotoren EM1a, EM2a abgegebenen Leistung an den Verbrennungsmotor geleitet wird. Während einer Fahrt kann mittels der Elektromotoren EM1a, EM2a eine Drehzahl des Verbrennungsmotors stufenlos vorgegeben werden, wenn zumindest die Schalteinheit S2a geschlossen ist. Die Schalteinheit S2a kann in sämtlichen elektromotorischen Vorwärtsgetriebegängen E1a, E2a, E3a, E4a geschlossen werden. Ein Übersetzungsverhältnis zwischen dem Elektromotor EM1a, der vorzugsweise zum Starten der Brennkraftmaschine genutzt wird, und der Brennkraftmaschine hängt dabei von einer Kraftfahrzeuggeschwindigkeit und dem geschalteten elektromotorischen Vorwärtsgetriebegang E1a, E2a, E3a, E4a ab. Im Fahrzeugstillstand ist der Verbrennungsmotor mittels des Elektromotors EM1a startbar, indem die Schalteinheiten S3a, S4a, S6a geschlossen und die Getriebeausgangswelle 12a fixiert werden, beispielsweise durch Betätigen einer Fahrzeugbremse. Alternativ ist der Verbrennungsmotor mittels des Elektromotors EM2a startbar, indem die Schalteinheiten S1a, S3a geschlossen und die Getriebeausgangswelle 12a fixiert werden. Ist lediglich eine der Schalteinheiten S1 a, S3a geschlossen, kann die Drehzahl der Brennkraftmaschine mittels beider Elektromotoren EM1a, EM2a stufenlos vorgegeben werden.

Der erste elektromotorische Vorwärtsgetriebegang E1a weist in diesem Ausführungsbeispiel zwischen dem Rotorelement 19a und der Getriebeausgangswelle 12a ein Übersetzungsverhältnis auf, das in etwa doppelt so groß ist wie ein Übersetzungsverhältnis des ersten verbrennungsmotorischen Vorwärtsgetriebegangs V1 a. Entsprechend groß ist ein Antriebsmoment, das in dem ersten elektromotorischen Vorwärtsgetriebegang E1 a an den Antriebsrädern bereitgestellt werden kann. Der erste elektromotorische Vorwärtsgetriebegang E1a wird gebildet, indem die drei Schalteinheiten S2a, S3a, S6a geschlossen werden. Das zweite Hohlrad P23a ist fixiert. Das zweite Sonnenrad P21a weist eine gleiche Drehzahl auf wie das Rotorelement 19a. Eine Drehzahl des zweiten Planetenradträgers P22a ist durch das Standübersetzungsverhältnis des zweiten Planetenradgetriebes P2a definiert. Das dritte Sonnenrad P31 a rotiert mit der gleichen Drehzahl wie der zweite Planetenradträger P22a. Der dritte Planetenradträger P32a ist fixiert. Eine Drehzahl des dritten Hohlrads P33a und damit die Drehzahl der Getriebeausgangswelle 12a ist somit durch die Drehzahl des zweiten Planetenradträgers P22a und das dritte Standübersetzungsverhältnis des dritten Planetenradgetriebes P3a definiert. Ein Leistungsfluss für den ersten elektromotorischen Vorwärtsgetriebegang E1a wird über das zweite Planetenradgetriebe P2a eingeleitet und über das dritte Planetenradgetriebe P3a ausgeleitet.

Der zweite elektromotorische Vorwärtsgetriebegang E2a wird gebildet, indem die zwei Schalteinheiten S5a, S6a geschlossen werden. Das dritte Sonnenrad P31a weist eine gleiche Drehzahl auf wie das Rotorelement 19a. Der dritte Planetenradträger P32a ist fixiert. Eine Drehzahl des dritten Hohlrads P33a und damit die Drehzahl der Getriebeausgangswelle 12a sind somit durch das Standübersetzungsverhältnis des dritten Planetenradgetriebes P3a und eine Drehzahl des dritten Sonnenrads P31a definiert. Ein Leistungsfluss für den zweiten elektromotorischen Vorwärtsgetriebegang E2a wird ausgehend von dem Rotorelement 19a lediglich über das dritte Planetenradgetriebe P3a geleitet.

Der dritte elektromotorische Vorwärtsgetriebegang E3a wird gebildet, indem die drei Schalteinheiten S2a, S3a, S4a geschlossen werden. Das zweite Sonnenrad P21a weist eine gleiche Drehzahl auf wie das Rotorelement 19a. Das zweite Hohlrad P23a ist fixiert. Eine Drehzahl des zweiten Planetenradträger P22a ist somit durch das Standübersetzungsverhältnis des zweiten Planetenradgetriebes P2a und die Drehzahl des Rotorelements 19a definiert. Das dritte Sonnenrad P31a weist die gleiche Drehzahl auf wie der zweite Planetenradträger P22a. Der dritte Planetenradträger P32a weist die gleiche Drehzahl auf wie das Rotorelement 19a. Eine Drehzahl des dritten Hohlrads P33a ist somit durch die Drehzahl des zweiten Planetenradträgers P22a und die Drehzahl des Rotorelements 19a definiert. Die Drehzahl der Getriebeausgangswelle 12a ist somit durch das Standübersetzungsverhältnis des zweiten Planetenradgetriebes P2a und ein Drehzahlverhältnis zwischen dem Rotorelement 19a und dem zweiten Planetenradträger P22a definiert. Ein Leistungsfluss für den zweiten elektromotorischen Vorwärtsgetriebegang E2a wird ausgehend von dem Rotorelement 19a auf die beiden Planetenradgetriebe P2a, P3a aufgesplittet und über das dritte Planetenradgetriebe P3a rekombiniert und wieder ausgeleitet.

Der vierte elektromotorische Vorwärtsgetriebegang E4a wird gebildet, indem die Schalteinheiten S4a, S5a geschlossen werden. Der dritte Planetenradträger P32a und das dritte Sonnenrad P31a weisen somit eine gleiche Drehzahl wie das Rotorelement 19a auf. Das dritte Planetenradgetriebe P3a ist damit verblockt. Die Getriebeausgangswelle 12a weist somit eine gleiche Drehzahl auf wie das Rotorelement 19a. Ein Leistungsfluss für den vierten elektromotorischen Vorwärtsgetriebegang E4a wird lediglich über das dritte Planetenradgetriebe P3a geleitet.

In den EVT-Fahrbereichen EVT1a, EVT2a, EVT3a, EVT4a ist ein Drehzahlverhältnis zwischen der Getriebeeingangswelle 11a und der Getriebeausgangswelle 12a mittels den Elektromotoren EM1a, EM2a zumindest in Teilbereichen stufenlos verstellbar. Dazu wird in den EVT-Fahrbereichen EVT1 a, EVT2a, EVT3a, EVT4a jeweils einer der Elektromotoren EM1a, EM2a als Generator betrieben, während der andere Elektromotor EM1a, EM2a eine Antriebsleistung bereitstellt. In den EVT-Fahrbereichen EVT1a, EVT2a, EVT3a wird je nach Betriebszustand eine elektrische Leistung aus einer Batterie entnommen oder es wird der Batterie elektrische Leistung zugeführt. Die EVT-Fahrbereiche EVT1a, EVT2a, EVT3a, EVT4a ermöglichen insbesondere ein Anfahren aus einem Fahrzeugstillstand, d.h. bei geeigneter Drehzahl der Rotorelemente 18a,19a weist die Getriebeeingangswelle 11a eine Drehzahl ungleich Null auf, während gleichzeitig die Getriebeausgangswelle 12a eine Drehzahl von Null aufweist. Durch eine Veränderung von Drehzahlen der Rotorelemente 18a, 19a kann dann die Drehzahl der Getriebeausgangswelle 12a verändert werden. Zudem sind die EVT-Fahrbereiche EVT1a, EVT2a, EVT3a, EVT4a für eine leistungsneutrale Fahrt vorgesehen, d.h. einer der Elektromotoren EM1a, EM2a läuft in einem Generatorbetrieb und stellt dabei eine Leistung, die von dem anderen der Elektromotoren EM1a, EM2a aufgenommen wird, vollständig bereit. Dabei ist insbesondere der erste EVT-Fahrbereich EVT1a zum Anfahren und zur Schaltung eines Rückwärtsgetriebegangs vorgesehen.

Der erste EVT-Fahrbereich EVT1a wird geschaltet, indem die Schalteinheiten S2a, S3a, S6a geschlossen werden. Eine von dem Verbrennungsmotor bereitgestellte Leistung wird über das erste Planetenradgetriebe P1a aufgesplittet. Ein Teil der Leistung wird von dem ersten Elektromotor EM1 a in elektrische Leistung umgewandelt. Ein weiterer Teil der Leistung wird über die Schalteinheit S2a auf die Zwischenwelle 17a übertragen. Eine von dem zweiten Elektromotor EM2a abgegebene Leistung wird auf das zweite Sonnenrad P21 a geleitet. Das zweite Hohlrad P23a ist fixiert. Das zweite Planetenradgetriebe P2a leitet somit die Leistung des zweiten Elektromotors EM2a ebenfalls über die Schalteinheit S2a auf die Zwischenwelle 17a weiter. An der Schalteinheit S2a wird der eine Teil der von dem Verbrennungsmotor abgegebenen Leistung und die von dem zweiten Elektromotor EM2a abgegebene Leistung kombiniert. Die kombinierte Leistung wird über das dritte Planetenradgetriebe P3a ausgeleitet.

Der zweite EVT-Fahrbereich EVT2a wird geschaltet, indem die Schalteinheiten S1a, S2a, S6a geschlossen werden. Eine von dem Verbrennungsmotor bereitgestellte Leistung wird über das erste Planetenradgetriebe P1a auf das zweite Planetenradgetriebe P2a weitergeleitet und aufgesplittet. Ein Teil der Leistung wird über das dritte Planetenradgetriebe P3a ausgeleitet. Ein weiterer Teil wird von dem zweiten Elektromotor EM2a in elektrische Leistung umgewandelt. Eine von dem ersten Elektromotor EM1a abgegebene Leistung wird über das erste Sonnenrad P11 a in das erste Planetenradgetriebe P1a eingeleitet und dort mit der von dem Verbrennungsmotor abgegebenen Leistung kombiniert.

Der dritte EVT-Fahrbereich EVT3a wird geschaltet, indem die Schalteinheiten S1a, S2a, S4a geschaltet werden. Eine von dem Verbrennungsmotor bereitgestellte Leistung wird über das erste Planetenradgetriebe P1a geleitet und an der Schalteinheit S2a aufgesplittet. Ein Teil der Leistung wird über das zweite Planetenradgetriebe P2a geleitet und auf den ersten Elektromotor EM1a, das erste Planetenradgetriebe P1a und das dritte Planetenradgetriebe P3a aufgesplittet. Ein an den ersten Elektromotor EM1a geleiteter Teil der Leistung wird in elektrische Leistung umgewandelt. Ein auf das erste Planetenradgetriebe P1a geleiteter Teil wird mit der von der Antriebsmaschine abgegebenen Leistung rekombiniert. Eine auf das dritte Planetenradgetriebe P3a weitergeleitete Leistung wird mit einer von dem zweiten Elektromotor EM2a abgegebenen Leistung kombiniert. Die Leistung wird über das dritte Planetenradgetriebe P3a ausgeleitet.

Der vierte EVT-Fahrbereich EVT4a wird geschaltet, indem die Schalteinheiten S1a, S4a, S5a geschaltet werden. Eine von dem Verbrennungsmotor bereitgestellte Leistung wird über das erste Planetenradgetriebe P1a geleitet und auf das zweite Planetenradgetriebe P2a weitergeleitet. Das zweite Planetenradgetriebe P2a splittet die Leistung auf. Ein Teil wird an dem zweiten Elektromotor EM2a in elektrische Leistung umgewandelt. Ein weiterer Teil wird mit einer von dem zweiten Elektromotor EM2a abgegebenen Leistung kombiniert und an das dritte Planetenradgetriebe P3a weitergeleitet. Über das verblockte dritte Planetenradgetriebe P3a wird die Leistung ausgeleitet.

Diese vier EVT-Fahrbereiche EVT1a, EVT2a, EVT3a, EVT4a sind untereinander sequentiell lastschaltbar. Zudem sind sieben weitere EVT-Fahrbereiche schaltbar, die je nach Betriebsstrategie genutzt werden können. Der fünfte EVT-Fahrbereich wird geschaltet, indem die Schalteinheiten S3a, S5a, S6a geschlossen werden. Der sechste EVT-Fahrbereich wird geschaltet, indem die Schalteinheiten S1a, S5a, S6a geschlossen werden. Der siebte EVT-Fahrbereich wird geschaltet, indem die Schalteinheiten S4a, S5a, S6a geschlossen werden. Der achte EVT-Fahrbereich wird geschaltet, indem die Schalteinheiten S2a, S3a, S4a geschlossen werden. Der neunte EVT-Fahrbereich wird geschaltet, indem die Schalteinheiten S2a, S5a, S6a geschlossen werden. Der zehnte EVT-Fahrbereich wird geschaltet, indem die Schalteinheiten S2a, S4a, S6a geschlossen werden. Der elfte EVT-Fahrbereich wird geschaltet, indem die Schalteinheiten S2a, S4a, S5a geschlossen werden.

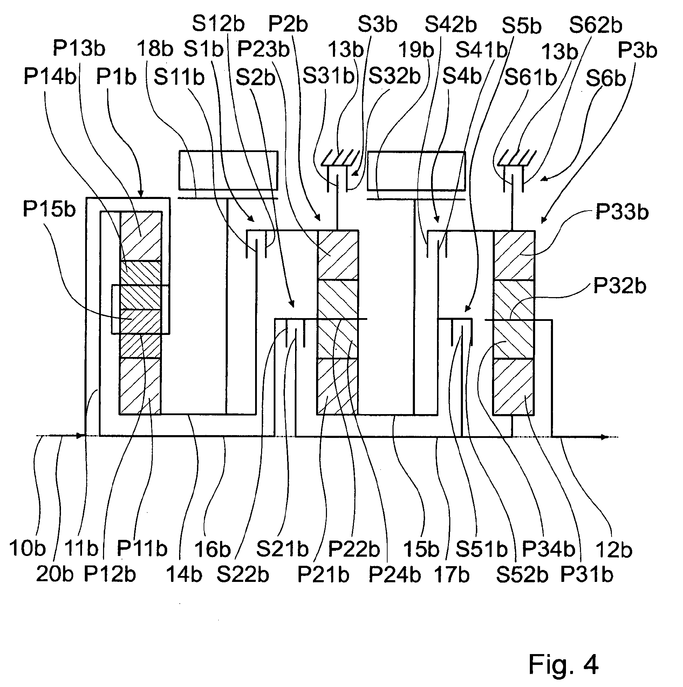

In der Figur 4 ist ein weiteres Ausführungsbeispiel der Erfindung gezeigt. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt ein erfindungsgemäßes Mehrstufengetriebe, das als ein Kraftfahrzeuggetriebe ausgestaltet ist. Das Mehrstufengetriebe weist genau drei Planetenradgetriebe P1 b, P2b, P3b auf. Das erste Planetenradgetriebe P1 b, das zweite Planetenradgetriebe P2b und das dritte Planetenradgetriebe P3b sind in dem dargestellten Ausführungsbeispiel entlang einer Hauptrotationsachse 10b hintereinander angeordnet. Das erste Planetenradgetriebe P1 b des Mehrstufengetriebes weist in dieser Ausgestaltung einen Doppelfachplanetenradsatz auf Das zweite Planetenradgetriebe P2b und das dritte Planetenradgetriebe P3b des Mehrstufengetriebes weisen in dieser Ausgestaltung einen Einfachplanetenradsatz auf.

Das Mehrstufengetriebe ist zur Anbindung von zwei Elektromotoren EM1 b, EM2b vorgesehen. In Verbindung mit den zwei Elektromotoren EM1b, EM2b und einem Verbrennungsmotor bildet das Mehrstufengetriebe ein Hybridantriebsmodul mit unterschiedlichen Fahrmodi aus. Zur Schaltung von unterschiedlichen Getriebegängen und Fahrmodi, in denen Leistungsflüsse aus dem Verbrennungsmotor und/oder den Elektromotoren EM1 b, EM2b unterschiedlich kombiniert oder geleitet werden, weist das Mehrstufengetriebe genau sechs Schalteinheiten S1b, S2b, S3b, S4b, S5b, S6b auf. Diese sind dazu vorgesehen, zumindest sechs verbrennungsmotorische Vorwärtsgetriebegänge V1 b, V2b, V3b, V4b, V5b, V6b zu schalten. Zudem ist mittels der Schalteinheiten S1 b, S2b, S3b, S4b, S5b, S6b ein zusätzlicher dritter Vorwärtsgetriebegang V3'b schaltbar. Zudem werden in der beispielhaft beschriebenen Betriebsstrategie mittels der Schalteinheiten S1 b, S2b, S3b, S4b, S5b, S6b vier elektromotorische Vorwärtsgetriebegänge E1b, E2b, E3b, E4b und vier leistungsverzweigte EVT-Fahrbereiche EVT1 b, EVT2b, EVT3b, EVT4b geschaltet. Ein Rückwärtsgetriebegang ist mittels eines der EVT-Fahrbereiche EVT1b, EVT2b, EVT3b, EVT4b oder mittels eines der elektromotorischen Vorwärtsgetriebegänge E1b, E2b, E3b, E4b darstellbar.

Die verbrennungsmotorischen Vorwärtsgetriebegänge V1b, V2b, V3b, V4b, V5b, V6b sind grundsätzlich untereinander zumindest sequentiell vollständig lastschaltbar. Von einem der verbrennungsmotorischen Vorwärtsgetriebegänge V1 b, V2b, V3b, V4b, V5b, V6b kann lastunterbrechungsfrei in den benachbarten verbrennungsmotorischen Vorwärtsgetriebegang V1 b, V2b, V3b, V4b, V5b, V6b geschaltet werden.

Die elektromotorischen Vorwärtsgetriebegänge E1b, E2b, E3b, E4b sind grundsätzlich lediglich teilweise sequentiell lastschaltbar. Dabei sind insbesondere der erste elektromotorische Vorwärtsgetriebegang E1b und der zweite elektromotorische Vorwärtsgetriebegang E2b sowie der dritte elektromotorische Vorwärtsgetriebegang E3b und der vierte elektromotorische Vorwärtsgetriebegang E4b untereinander lastschaltbar. Zudem sind der erste elektromotorische Vorwärtsgetriebegang E1b und der dritte elektromotorische Vorwärtsgetriebegang E3b sowie der zweite elektromotorische Vorwärtsgetriebegang E3b und der vierte elektromotorische Vorwärtsgetriebegang E4b untereinander lastschaltbar.

Die EVT-Fahrbereiche EVT1b, EVT2b, EVT3b, EVT4b sind grundsätzlich untereinander zumindest sequentiell vollständig lastschaltbar. Von einem der EVT-Fahrbereiche EVT1 b, EVT2b, EVT3b, EVT4b kann lastunterbrechungsfrei in den benachbarten EVT-Fahrbereich EVT1b, EVT2b, EVT3b, EVT4b geschaltet werden.

Zudem sind grundsätzlich auch Lastschaltungen zwischen den verbrennungsmotorischen Vorwärtsgetriebegängen V1 b, V2b, V3b, V4b, V5b, V6b, den elektromotorischen Vorwärtsgetriebegängen E1b, E2b, E3b, E4b und den EVT-Fahrbereichen EVT1b, EVT2b, EVT3b, EVT4b möglich. Beispielsweise sind der erste verbrennungsmotorische Vorwärtsgetriebegang V1 b, der erste elektromotorische Vorwärtsgetriebegang E1 b und die beiden EVT-Fahrbereiche EVT1 b, EVT2b untereinander lastschaltbar. Der zweite verbrennungsmotorische Vorwärtsgetriebegang V2b, der zweite elektromotorische Vorwärtsgetriebegang E2b und der EVT-Fahrbereich EVT2b sind untereinander lastschaltbar. Der dritte verbrennungsmotorische Vorwärtsgetriebegang V3b und die EVT-Fahrbereiche EVT2b, EVT3b sind untereinander lastschaltbar. Der vierte verbrennungsmotorische Vorwärtsgetriebegang V4b, der vierte elektromotorische Vorwärtsgetriebegang E4b und die EVT-Fahrbereiche EVT3b, EVT4b sind untereinander lastschaltbar. Der fünfte verbrennungsmotorische Vorwärtsgetriebegang V5b, der dritte elektromotorische Vorwärtsgetriebegang E3b und der EVT-Fahrbereich EVT3b sind untereinander lastschaltbar. Der sechste verbrennungsmotorische Vorwärtsgetriebegang V6b, der vierte elektromotorische Vorwärtsgetriebegang E4b und der EVT-Fahrbereich EVT4b sind untereinander lastschaltbar. Der erste elektromotorische Vorwärtsgetriebegang E1b und die EVT-Fahrbereiche EVT1b, EVT2b sind untereinander lastschaltbar. Der zweite elektromotorische Vorwärtsgetriebegang E2b und die EVT-Fahrbereiche EVT1b, EVT2b, EVT4b sind untereinander lastschaltbar. Der dritte elektromotorische Vorwärtsgetriebegang E3b und die EVT-Fahrbereiche EVT1 b, EVT3b sind untereinander lastschaltbar. Der vierte elektromotorische Vorwärtsgetriebegang E4b und die EVT-Fahrbereiche EVT3b, EVT4b sind untereinander lastschaltbar. Weitere mögliche Lastschaltungen, insbesondere Lastschaltungen jeweils zwischen den verbrennungsmotorischen Vorwärtsgetriebegängen V1 b, V2b, V3b, V4b, V5b, V6b, den elektromotorischen Vorwärtsgetriebegängen E1b, E2b, E3b, E4b und den EVT-Fahrbereichen EVT1b, EVT2b, EVT3b, EVT4b, entsprechen dem vorangegangenen Ausführungsbeispiel.

Das Mehrstufengetriebe ist dazu vorgesehen, den nicht näher dargestellten Verbrennungsmotor und die Elektromotoren EM1 b, EM2b mit nicht näher dargestellten Antriebsrädern des Kraftfahrzeugs zu verbinden. Mittels der Mehrstufengetriebe kann ein Übersetzungsverhältnis zwischen dem Verbrennungsmotor, den Elektromotoren EM1 b, EM2b und den Antriebsrädern eingestellt werden.

Das Mehrstufengetriebe weist eine Getriebeeingangswelle 11 b auf, die dazu vorgesehen ist, ein Antriebsmoment in das Mehrstufengetriebe einzuleiten. Der Getriebeeingangswelle 11 b kann grundsätzlich ein nicht näher dargestelltes Modul vorgeschaltet sein, das insbesondere dazu vorgesehen sein soll, eine Anfahrfunktionalität bereitzustellen und/oder die Brennkraftmaschine abzutrennen. Als ein vorgeschaltetes Modul ist beispielsweise ein Wandler, eine nasse Anfahrkupplung und/oder eine einfache Trennkupplung denkbar. In der dargestellten Ausgestaltung wird jedoch auf ein vorgeschaltetes Modul verzichtet.

Zur Anbindung des Verbrennungsmotors umfasst das Mehrstufengetriebe ein Kurbelwellenanbindungselement 20b, das zur permanent drehfesten Verbindung mit einer Kurbelwelle des Verbrennungsmotors vorgesehen ist. Die Getriebeeingangswelle 11 b ist permanent drehfest mit der Kurbelwelle des Verbrennungsmotors verbunden. Zur Anbindung der Elektromotoren EM1b, EM2b umfasst das Mehrstufengetriebe zwei Rotorelemente 18b, 19b, die in dem dargestellten Ausführungsbeispiel jeweils permanent drehfest mit einem Rotor des entsprechenden Elektromotors EM1b, EM2b verbunden sind oder zumindest teilweise einstückig mit dem Rotor ausgebildet sind. Die Rotorelemente 18b, 19b können auch abkoppelbar ausgestaltet sein. Grundsätzlich ist es weiter denkbar, dass an das Mehrstufengetriebe lediglich ein einzelner Elektromotor angebunden ist.

Weiter weist das Mehrstufengetriebe eine Getriebeausgangswelle 12b auf, die dazu vorgesehen ist, ein Antriebsmoment aus dem Mehrstufengetriebe auszuleiten. Die Getriebeausgangswelle 12b ist dazu vorgesehen, mit den Antriebsrädern des Kraftfahrzeugs verbunden zu werden. Der Getriebeausgangswelle 12b kann ein nicht näher dargestelltes Modul nachgeschaltet sein, mittels dessen das aus dem Mehrstufengetriebe ausgeleitete Moment auf die Antriebsräder verteilt werden kann, wie beispielsweise ein Differentialgetriebe, das für einen Drehzahlausgleich zwischen den Antriebsrädern vorgesehen ist, oder ein Allradantriebsmodul, das das Antriebsmoment auf zwei verschiedene Antriebsachsen verteilt. Die Getriebeeingangswelle 11 b und die Getriebeausgangswelle 12b können grundsätzlich beliebig zueinander angeordnet sein. Dabei ist insbesondere eine koaxiale Anordnung auf gegenüberliegenden Seiten des Mehrstufengetriebes vorteilhaft. Aber auch eine Anordnung auf der gleichen Seite des Mehrstufengetriebes ist denkbar. Zudem kann durch eine Umordnung das Mehrstufengetriebe für einen Front-Quer-Einbau vorgesehen werden, bei dem ein Abtrieb zwischen den einzelnen Planetenradgetrieben P1 b, P2b, P3b liegt.

Das erste Planetenradgetriebe P1 b ist eingangsseitig angeordnet. Das erste Planetenradgetriebe P1 b weist einen Doppelplanetenradsatz auf. Der Doppelplanetenradsatz umfasst ein erstes Sonnenrad P11 b, ein erstes Hohlrad P13b und einen ersten Planetenradträger P12b. Der Planetenradträger P12b führt Planetenräder P14b, P15b auf einer Kreisbahn. Die paarweise angeordneten Planetenräder P14b, P15b kämmen jeweils miteinander. Das innere Planetenrad P14b kämmt zudem mit dem Sonnenrad P11b. Das äußere Planetenrad P15b kämmt zudem mit dem Hohlrad P13b. Die Planetenräder P14b, P15b sind drehbar auf dem Planetenradträger P12b gelagert, der für die zwei miteinander kämmenden Planetenräder P14b, P15b vorgesehen ist.

Das zweite Planetenradgetriebe P2b ist mittig angeordnet. Das zweite Planetenradgetriebe P2b weist einen Einfachplanetenradsatz auf. Der Einfachplanetenradsatz umfasst ein zweites Sonnenrad P21 b, ein zweites Hohlrad P23b und einen zweiten Planetenradträger P22b. Der Planetenradträger P22b führt Planetenräder P24b auf einer Kreisbahn. Die Planetenräder P24b kämmen mit dem Sonnenrad P21b und mit dem Hohlrad P23b. Die Planetenräder P24b sind drehbar auf dem Planetenradträger P22b gelagert.

Das dritte Planetenradgetriebe P3b ist ausgangsseitig angeordnet. Das dritte Planetenradgetriebe P3b weist einen Einfachplanetenradsatz auf. Der Einfachplanetenradsatz umfasst ein drittes Sonnenrad P31b, ein drittes Hohlrad P33b und einen dritten Planetenradträger P32b. Der Planetenradträger P32b führt Planetenräder P34b auf einer Kreisbahn. Die Planetenräder P34b kämmen mit dem Sonnenrad P31 b und mit dem Hohlrad P33b. Die Planetenräder P34b sind drehbar auf dem Planetenradträger P32b gelagert.

Die vier Schalteinheiten S1b, S2b, S4b, S5b sind als Kupplungen ausgebildet. Sie weisen jeweils ein erstes drehbares Kopplungselement S11 b, S21b, S41 b, S51 b und ein zweites drehbares Kopplungselement S12b, S22b, S42b, S52b auf. Die vier Schalteinheiten S1b, S2b, S4b, S5b sind jeweils dazu vorgesehen, ihre beiden Kopplungselemente S11b, S12b, S31b, S32b, S41b, S42b drehfest miteinander zu verbinden.

Die zwei Schalteinheiten S3b, S6b sind als Bremsen ausgebildet. Sie weisen jeweils nur ein drehbares Kopplungselement S31 b, S61 b auf. Ein zweites Kopplungselement S32b, S62b der Schalteinheiten S3b, S6b ist permanent drehfest mit einem Getriebegehäuse 13b verbunden. Die Schalteinheiten S3b, S6b sind dazu vorgesehen, ihr drehbares Kopplungselement S31 b, S61 b zu fixieren, indem sie es drehfest mit dem Getriebegehäuse 13b verbinden.

Die Schalteinheiten S3b, S4b, S5b sind reibschlüssig ausgeführt. Sie weisen jeweils ein nicht näher dargestelltes Kupplungslamellenpaket auf. Die Schalteinheiten S2b, S6b sind rein formschlüssig ausgeführt. Zudem ist auch die Schalteinheit S1b rein formschlüssig ausgeführt. Die Schalteinheiten S1b, S2b, S6b umfassen eine nicht näher dargestellte Schiebemuffe zur Herstellung einer drehfesten, formschlüssigen Verbindung. Die drei Schalteinheiten S1b, S2b, S6b sind dabei unsynchronisiert ausgeführt. Grundsätzlich können die Schalteinheiten S1 b, S2b, S6b aber auch reibschlüssig oder synchronisiert ausgeführt werden.

In dem dargestellten Ausführungsbeispiel sind die Schalteinheiten S1 b, S2b in axialer Richtung zwischen dem ersten Planetenradgetriebe P1 b und dem zweiten Planetenradgetriebe P2b angeordnet. Die Schalteinheit S3b ist in Höhe des zweiten Planetenradgetriebes P2b angeordnet. Die Schalteinheiten S4b, S5b sind zwischen dem zweiten Planetenradgetriebe P2b und dem dritten Planetenradgetriebe P3b angeordnet. Die Schalteinheit S6b ist in Höhe des dritten Planetenradgetriebes P3b angeordnet. Die Schalteinheiten S1 b, S3b, S4b, S6b sind außenliegend ausgeführt. Die Schalteinheiten S2b, S5b sind innenliegend ausgeführt.

Die Getriebeeingangswelle 11 b ist drehfest mit dem ersten Planetenradträger P12b verbunden. Die Getriebeausgangswelle 12b ist drehfest mit dem dritten Planetenradträger P32b verbunden. Zudem umfasst das Mehrstufengetriebe vier Zwischenwellen 14b, 15b, 16b, 17b, mittels derer die Planetenradgetriebe P1b, P2b, P3b und die Schalteinheiten S1b, S2b, S3b, S4b, S5b, S6b wirkungsmäßig miteinander verbunden bzw. verbindbar sind.

Die Getriebeeingangswelle 11 b ist lediglich mit dem ersten Planetenradträger P12b permanent drehfest verbunden. Die erste Zwischenwelle 14b verbindet das erste Sonnenrad P11b, das Rotorelement 18b für den ersten Elektromotor EM1 b und das erste Kopplungselement S11 b der Schalteinheit S1 b permanent drehfest miteinander. Die zweite Zwischenwelle 15b verbindet das zweite Sonnenrad P21 b, das Rotorelement 19b für den zweiten Elektromotor EM2b, das erste Kopplungselement S41 b der Schalteinheit S4b und das zweite Kopplungselement S52b der Schalteinheit S5b permanent drehfest miteinander. Die dritte Zwischenwelle 16b verbindet das erste Hohlrad P13b, den zweiten Planetenradträger P22b und das zweite Kopplungselement S22b der Schalteinheit S2b permanent drehfest miteinander. Die vierte Zwischenwelle 17b verbindet das erste Kopplungselement S21 b der Schalteinheit S2b, das erste Kopplungselement S51 b der Schalteinheit S5b und das dritte Sonnenrad P31 b permanent drehfest miteinander. Die Getriebeausgangswelle 12b ist lediglich mit dem dritten Planetenradträger P32b permanent drehfest verbunden. Das zweite Kopplungselement S12b der Schalteinheit S1b und das erste Kopplungselement S31b der Schalteinheit S3b sind direkt permanent drehfest an das zweite Hohlrad P23b angebunden. Das zweite Kopplungselement S42b der Schalteinheit S4b und das erste Kopplungselement S61 b der Schalteinheit S6b sind direkt permanent drehfest an das dritte Hohlrad P33b angebunden.

Die Getriebeeingangswelle 11 b ist radial außen um das erste Planetenradgetriebe P1 b herumgeführt und ausgangsseitig an den ersten Planetenradträger P12b angebunden. Die erste Zwischenwelle 14b ist zur Anbindung des Rotorelements 18b für den ersten Elektromotor EM1 b und des Kopplungselements S11 b axial zwischen dem ersten Planetenradgetriebe P1b und dem zweiten Planetenradgetriebe P2b radial nach außen geführt. Die zweite Zwischenwelle 15b ist zur Anbindung des Rotorelements 19b für den zweiten Elektromotor EM2b und des Kopplungselements S41 b axial zwischen dem zweiten Planetenradgetriebe P2b und dem dritten Planetenradgetriebe P3b radial nach außen geführt. Die dritte Zwischenwelle 16b ist eingangsseitig des ersten Planetenradgetriebes P1 b an das erste Hohlrad P13b angebunden und durchsetzt zur Anbindung des Kopplungselements S22b und des zweiten Planetenradträgers P22b das erste Planetenradgetriebe P1 b. Die vierte Zwischenwelle 17b, an die das Kopplungselement S21 b angebunden ist, durchsetzt das zweite Planetenradgetriebe P2b. Zur Anbindung des Kopplungselements S51 b ist die vierte Zwischenwelle 17b axial zwischen dem dritten Planetenradgetriebe P3b und der Zwischenwelle 15b radial nach außen geführt. Die Getriebeausgangswelle 12b ist ausgangsseitig des dritten Planetenradgetriebes P3b an den dritten Planetenradträger P32b angebunden.

Die verbrennungsmotorischen Vorwärtsgetriebegänge V1b, V2b, V3b, V3'b, V4b, V5b, V6b, die elektromotorischen Vorwärtsgetriebegänge E1b, E2b, E3b, E4b und die EVT-Fahrbereiche EVT1 b, EVT2b, EVT3b, EVT4b werden mittels der Schalteinheiten S1b, S2b, S3b, S4b, S5b, S6b geschaltet (vgl. Figur 2). Für die verbrennungsmotorischen Vorwärtsgetriebegänge V1 b, V2b, V3b, V3'b, V4b, V5b, V6b werden jeweils vier der insgesamt sechs Schalteinheiten S1b, S2b, S3b, S4b, S5b, S6b geschlossen. Die Schalteinheit S1b ist dabei in sämtlichen verbrennungsmotorischen Vorwärtsgetriebegänge V1 b, V2b, V3b, V3'b, V4b, V5b, V6b geschlossen. Für die elektromotorischen Vorwärtsgetriebegänge E1 b, E3b werden jeweils drei der insgesamt sechs Schalteinheiten S1b, S2b, S3b, S4b, S5b, S6b geschlossen. Die elektrischen Vorwärtsgetriebegänge E2b, E4b sind durch Schließen von zwei der sechs Schalteinheiten S1b, S2b, S3b, S4b, S5b, S6b bildbar, wobei in den elektromotorischen Vorwärtsgetriebegängen E2b, E4b zusätzlich eine oder mehrere der Schalteinheiten S1b, S2b, S3b geschlossen werden können. Für die EVT-Fahrbereiche EVT1b, EVT2b, EVT3b, EVT4b werden jeweils drei der sechs Schalteinheiten S1b, S2b, S3b, S4b, S5b, S6b geschlossen. Bei einem Schaltvorgang unter Last wird jeweils genau eine der Schalteinheiten S1 b, S2b, S3b, S4b, S5b, S6b geöffnet, während gleichzeitig genau eine der anderen Schalteinheiten S1b, S2b, S3b, S4b, S5b, S6b geschlossen wird.

In einem geschlossenen Zustand verbindet die Schalteinheit S1 b das erste Sonnenrad P11 b und das zweite Hohlrad P23b drehfest miteinander. Die Schalteinheit S2b verbindet in einem geschlossenen Zustand das erste Hohlrad P13b, den zweiten Planetenradträger P22b und das dritte Sonnenrad P31 b drehfest miteinander. Die Schalteinheit S3b verbindet in einem geschlossenen Zustand das zweite Hohlrad P23b drehfest mit dem Getriebegehäuse 13b. Die Schalteinheit S4b verbindet in einem geschlossenen Zustand das zweite Sonnenrad P21 b und das dritte Hohlrad P33b drehfest miteinander. Die Schalteinheit S5b verbindet in einem geschlossenen Zustand das zweite Sonnenrad P21 b und das dritte Sonnenrad P31 b drehfest miteinander. Die Schalteinheit S6b verbindet in geschlossenem Zustand das dritte Hohlrad P33b drehfest mit dem Getriebegehäuse 13b.

Sind die Schalteinheiten S1b, S3b gleichzeitig geschlossen, ist das erste Sonnenrad P11b über die Schalteinheit S1b, S3b drehfest mit dem Getriebegehäuse 13b verbunden. Sind die Schalteinheiten S2b, S5b gleichzeitig geschlossen, sind das zweite Sonnenrad P21 b und der zweite Planetenradträger P22b drehfest miteinander verbunden, wodurch das zweite Planetenradgetriebe P2b verblockt ist. Sind die Schalteinheiten S4b, S5b gleichzeitig geschlossen, sind das dritte Hohlrad P33b und das dritte Sonnenrad P31b drehfest miteinander verbunden, wodurch das dritte Planetenradgetriebe P3b verblockt ist. Sind die Schalteinheiten S4b, S6b gleichzeitig geschlossen, ist das zweite Sonnenrad P21 b über die Schalteinheiten S4b, S6b drehfest mit dem Getriebegehäuse 13b verbunden.

In den im Folgenden beschrieben verbrennungsmotorischen Vorwärtsgetriebegänge V1 b, V2b, V3b, V3'b, V4b, V5b, V6b, den elektromotorischen Vorwärtsgetriebegängen E1 b, E2b, E3b, E4b und den EVT-Fahrbereichen EVT1b, EVT2b, EVT3b, EVT4b sind Drehzahlen und Leistungsflüsse beispielhaft für einen Betriebspunkt beschrieben. Insbesondere in den EVT-Fahrbereichen EVT1b, EVT2b, EVT3b, EVT4b können sich in Abhängigkeit von einer Leistung, die von den Elektromotoren EM1b, EM2b abgegeben oder aufgenommen wird, grundsätzlich auch andere Drehzahlen oder Leistungsflüsse einstellen.

In den verbrennungsmotorischen Vorwärtsgetriebegängen V1 b, V2b, V3b, V3'b, V4b, V5b, V6b sind die Elektromotoren EM1b, EM2b für eine Boostfunktion und eine Rekuperation vorgesehen. Weiter ist eine rein verbrennungsmotorische Fahrt möglich.

Der erste verbrennungsmotorische Vorwärtsgetriebegang V1 b wird gebildet, indem die vier Schalteinheiten S1b, S2b, S3b, S6b geschlossen werden. Der erste Planetenradträger P12b rotiert mit einer gleichen Drehzahl wie die Getriebeeingangswelle 11b. Das erste Sonnenrad P11b ist fixiert. Eine Drehzahl des ersten Hohlrads P13b ist somit durch die Drehzahl der Getriebeeingangswelle 11 b und das Standübersetzungsverhältnis des ersten Planetenradgetriebes P1 b definiert. Das dritte Sonnenrad P31 b weist die gleiche Drehzahl auf wie das erste Hohlrad P13b. Das dritte Hohlrad P33b ist fixiert. Eine Drehzahl des dritten Planetenradträgers P32b ist somit durch die Drehzahl des ersten Hohlrads P13b und das Standübersetzungsverhältnis des dritten Planetenradgetriebes P3b definiert. Die Drehzahl der Getriebeausgangswelle 12b ist damit durch die Standübersetzungsverhältnisse der beiden Planetenradgetriebe P1b, P3b definiert. Ein Leistungsfluss für den ersten verbrennungsmotorischen Vorwärtsgetriebegang V1 b wird über das erste Planetenradgetriebe P1 b eingeleitet und über das dritte Planetenradgetriebe P3b ausgeleitet.

Der zweite verbrennungsmotorische Vorwärtsgetriebegang V2b wird gebildet, indem die vier Schalteinheiten S1b, S2b, S5b, S6b geschlossen werden. Durch die Schalteinheiten S2b, S5b ist der zweite Planetenradträger P22b drehfest mit dem zweiten Sonnenrad P21b verbunden. Das zweite Planetenradgetriebe P2b ist somit verblockt. Das erste Sonnenrad P11b ist drehfest mit dem zweiten Hohlrad P23b verbunden. Das erste Hohlrad P13b ist drehfest mit dem zweiten Planetenradträger P22b verbunden. Das erste Planetenradgetriebe P1 b ist somit ebenfalls verblockt. Das dritte Sonnenrad P31 b weist somit eine gleiche Drehzahl auf wie die Getriebeeingangswelle 11 b. Das dritte Hohlrad P33b ist fixiert. Ein Drehzahlverhältnis zwischen dem dritten Sonnenrad P31 b und dem dritten Planetenradträger P32b und damit die Drehzahl der Getriebeausgangswelle 12b sind somit durch das Standübersetzungsverhältnis des dritten Planetenradgetriebes P3b definiert. Ein Leistungsfluss für den zweiten verbrennungsmotorischen Vorwärtsgetriebegang V2b wird über das erste Planetenradgetriebe P1 b eingeleitet und auf das zweite Planetenradgetriebe P2b weitergeleitet. Der in das zweite Planetenradgetriebe P2b eingeleitete Leistungsfluss wird teilweise auf das erste Planetenradgetriebe P1 b rückgekoppelt und teilweise auf das dritte Planetenradgetriebe P3b weitergeleitet. Über das dritte Planetenradgetriebe P3b wird der Leistungsfluss ausgeleitet.

Der dritte verbrennungsmotorische Vorwärtsgetriebegang V3b wird gebildet, indem die vier Schalteinheiten S1b, S2b, S4b, S6b geschlossen werden. Das erste Sonnenrad P11 b ist drehfest mit dem zweiten Hohlrad P23b verbunden. Das erste Hohlrad P13b ist drehfest mit dem zweiten Planetenradträger P22b verbunden. Durch die Schalteinheiten S4b, S6b ist das zweite Sonnenrad P21 b drehfest mit dem Getriebegehäuse 13b verbunden. Ein Drehzahlverhältnis zwischen dem zweiten Planetenradträger P22b und dem zweiten Hohlrad P23b ist somit durch das Standübersetzungsverhältnis des zweiten Planetenradgetriebes P2b definiert. Das erste Hohlrad P13b und das erste Sonnenrad P11 b weisen das gleiche Drehzahlverhältnis auf. Der erste Planetenradträger P12b weist eine gleiche Drehzahl auf wie die Getriebeeingangswelle 11 b. Die Drehzahl des dritten Sonnenrads P31 b, das drehfest mit dem ersten Hohlrad P13b verbunden ist, ist somit durch das Drehzahlverhältnis zwischen dem zweiten Planetenradträger P22b und dem zweiten Hohlrad P23b definiert. Das dritte Hohlrad P33b ist fixiert. Ein Drehzahlverhältnis zwischen dem dritten Sonnenrad P31 b und dem dritten Planetenradträger P32b ist somit durch das Standübersetzungsverhältnis des dritten Planetenradgetriebes P3b definiert. Die Drehzahl der Getriebeausgangswelle 12b ist somit durch das Standübersetzungsverhältnis des dritten Planetenradgetriebes P3b definiert und das Drehzahlverhältnis zwischen dem zweiten Planetenradträger P22b und dem zweiten Hohlrad P23b definiert. Ein Leistungsfluss für den dritten verbrennungsmotorischen Vorwärtsgetriebegang V3b wird über das erste Planetenradgetriebe P1 b eingeleitet und auf das zweite Planetenradgetriebe P2b weitergeleitet. Der in das zweite Planetenradgetriebe P2b eingeleitete Leistungsfluss wird teilweise auf das erste Planetenradgetriebe P1b rückgekoppelt und teilweise auf das dritte Planetenradgetriebe P3b weitergeleitet. Über das dritte Planetenradgetriebe P3b wird der Leistungsfluss ausgeleitet.

Der zusätzliche verbrennungsmotorische Vorwärtsgetriebegang V3'b weist ein Übersetzungsverhältnis auf, das zwischen einem Übersetzungsverhältnis des dritten verbrennungsmotorischen Vorwärtsgetriebegangs V3b und einem Übersetzungsverhältnis des vierten verbrennungsmotorischen Vorwärtsgetriebegangs V4b liegt. Der zusätzliche verbrennungsmotorische Vorwärtsgetriebegang V3'b wird gebildet, indem die vier Schalteinheiten S1b, S3b, S5b, S6b geschlossen werden. Der erste Planetenradträger P12b rotiert mit einer gleichen Drehzahl wie die Getriebeeingangswelle 11 b. Das erste Sonnenrad P11 b ist fixiert. Eine Drehzahl des ersten Hohlrads P13b ist somit durch die Drehzahl der Getriebeeingangswelle 11b und das Standübersetzungsverhältnis des ersten Planetenradgetriebes P1 b definiert. Der zweite Planetenradträger P22b rotiert mit der gleichen Drehzahl wie das erste Hohlrad P13b. Das zweite Hohlrad P23b ist fixiert. Eine Drehzahl des zweiten Sonnenrads P21b ist somit durch das Standübersetzungsverhältnis des zweiten Planetenradgetriebes P2b und die Drehzahl des ersten Hohlrads P13b definiert. Das dritte Sonnenrad P31 b rotiert mit der gleichen Drehzahl wie das zweite Sonnenrad P21 b. Das dritte Hohlrad P33b ist fixiert. Eine Drehzahl des dritten Planetenradträgers P32b ist somit durch das Standübersetzungsverhältnis des dritten Planetenradgetriebes P3b und die Drehzahl des zweiten Sonnenrads P21 b definiert. Die Drehzahl der Getriebeausgangswelle 12b ist damit durch die Standübersetzungsverhältnisse der drei Planetenradgetriebe P1b, P2b, P3b definiert. Ein Leistungsfluss für den zusätzlichen verbrennungsmotorischen Vorwärtsgetriebegang V3'b wird über das erste Planetenradgetriebe P1 b eingeleitet, an das zweite Planetenradgetriebe P2b weitergeleitet und über das dritte Planetenradgetriebe P3b ausgeleitet.

Der vierte verbrennungsmotorische Vorwärtsgetriebegang V4b wird gebildet, indem die vier Schalteinheiten S1 b, S2b, S4b, S5b geschlossen werden. Durch die Schalteinheiten S2b, S5b ist der zweite Planetenradträger P22b drehfest mit dem zweiten Sonnenrad P21 b verbunden. Das zweite Planetenradgetriebe P2b ist somit verblockt. Das erste Sonnenrad P11b ist drehfest mit dem zweiten Hohlrad P23b verbunden. Das erste Hohlrad P13b ist drehfest mit dem zweiten Planetenradträger P22b verbunden. Das erste Planetenradgetriebe P1 b ist somit ebenfalls verblockt. Über die Schalteinheiten S4b, S5b ist das dritte Sonnenrad P31b drehfest mit dem dritten Hohlrad P33b verbunden. Das dritte Planetenradgetriebe P3b ist ebenfalls verblockt. Die Getriebeausgangswelle 12b weist somit eine gleiche Drehzahl auf wie die Getriebeeingangswelle 11 b. Ein Leistungsfluss für den zweiten verbrennungsmotorischen Vorwärtsgetriebegang V2b wird über das erste Planetenradgetriebe P1 b eingeleitet und auf das zweite Planetenradgetriebe P2b weitergeleitet. Der in das zweite Planetenradgetriebe P2b eingeleitete Leistungsfluss wird teilweise auf das erste Planetenradgetriebe P1 b rückgekoppelt und teilweise auf das dritte Planetenradgetriebe P3b weitergeleitet. Über das dritte Planetenradgetriebe P3b wird der Leistungsfluss ausgeleitet.

Der fünfte verbrennungsmotorische Vorwärtsgetriebegang V5b wird gebildet, indem die vier Schalteinheiten S1 b, S2b, S3b, S4b geschlossen werden. Der erste Planetenradträger P12b rotiert mit einer gleichen Drehzahl wie die Getriebeeingangswelle 11 b. Das erste Sonnenrad P11 b ist fixiert. Eine Drehzahl des ersten Hohlrads P13b ist somit durch die Drehzahl der Getriebeeingangswelle 11 b und das Standübersetzungsverhältnis des ersten Planetenradgetriebes P1 b definiert. Der zweite Planetenradträger P22b rotiert mit der gleichen Drehzahl wie das erste Hohlrad P13b. Das zweite Hohlrad P23b ist fixiert. Eine Drehzahl des zweiten Sonnenrads P21 b ist somit durch die Drehzahl des ersten Hohlrads P13b und das Standübersetzungsverhältnis des zweiten Planetenradgetriebes P2b definiert. Das dritte Hohlrad P33b weist die gleiche Drehzahl auf wie das zweite Sonnenrad P21 b. Das dritte Sonnenrad P31 b weist die gleiche Drehzahl auf wie das erste Hohlrad P13b. Eine Drehzahl des dritten Planetenradträgers P32b und damit die Drehzahl der Getriebeausgangswelle 12b ist somit durch die Drehzahl des ersten Hohlrads P13b und die Drehzahl des zweiten Sonnenrads P21 b definiert. Ein Leistungsfluss für den fünften verbrennungsmotorischen Vorwärtsgetriebegang V5b wird über das erste Planetenradgetriebe P1 b eingeleitet und auf das zweite Planetenradgetriebe P2b und das dritte Planetenradgetriebe P3b aufgesplittet. Der in das zweite Planetenradgetriebe P2b eingeleitete Leistungsfluss wird an das dritte Planetenradgetriebe P3b weitergeleitet, wo die Kraftflüsse aus dem ersten Planetenradgetriebe P1 b und dem zweiten Planetenradgetriebe P2b wieder kombiniert und ausgeleitet werden.

Der sechste verbrennungsmotorische Vorwärtsgetriebegang V6b wird gebildet, indem die vier Schalteinheiten S1 b, S3b, S4b, S5b geschlossen werden. Der erste Planetenradträger P12b rotiert mit einer gleichen Drehzahl wie die Getriebeeingangswelle 11 b. Das erste Sonnenrad P11 b ist fixiert. Eine Drehzahl des ersten Hohlrads P13b ist somit durch die Drehzahl der Getriebeeingangswelle 11 b und das Standübersetzungsverhältnis des ersten Planetenradgetriebes P1 b definiert. Der zweite Planetenradträger P22b rotiert mit der gleichen Drehzahl wie das erste Hohlrad P13b.

Das zweite Hohlrad P23b ist fixiert. Eine Drehzahl des zweiten Sonnenrads P21 b ist somit durch die Drehzahl des ersten Hohlrads P13b und das Standübersetzungsverhältnis des zweiten Planetenradgetriebes P2b definiert. Das dritte Planetenradgetriebe P3b ist verblockt. Das dritte Hohlrad P33b und das dritte Sonnenrad P31 b weisen die gleiche Drehzahl auf wie das zweite Sonnenrad P21 b. Der dritte Planetenradträger P32b, der drehfest mit der Getriebeausgangswelle 12b verbunden ist, weist somit ebenfalls die gleiche Drehzahl auf wie das zweite Sonnenrad P21 b. Die Drehzahl der Getriebeausgangswelle 12b ist somit durch die Drehzahl des Standübersetzungsverhältnisses der ersten beiden Planetenradgetriebe P1 b, P2b definiert. Ein Leistungsfluss für den sechsten verbrennungsmotorischen Vorwärtsgetriebegang V6b wird über das erste Planetenradgetriebe P1 b eingeleitet und auf das zweite Planetenradgetriebe P2b weitergeleitet. Der in das zweite Planetenradgetriebe P2b eingeleitete Leistungsfluss wird über den Planetenradträger P32b des dritten Planetenradgetriebes P3b ausgeleitet.

In den elektrischen Vorwärtsgetriebegängen E1b, E2b, E3b, E4b ist der zweite Elektromotor EM2b als Antriebsmotor vorgesehen. Um in den elektromotorischen Vorwärtsgetriebegängen E1b, E2b, E3b, E4b den ersten Elektromotor EM1 b für eine Boost-Funktion zu nutzen, ist es notwendig, den Verbrennungsmotor von dem Mehrstufengetriebe zu entkoppeln. In einer nicht näher dargestellten Ausgestaltung kann für eine Boost-Funktion in den elektromotorischen Vorwärtsgetriebegängen E1 b, E2b, E3b, E4b eine Trennkupplung zwischen der Getriebeeingangswelle 11 b und dem Kurbelwellenanbindungselement 20b vorgesehen werden.

Weiter ist in den elektromotorischen Vorwärtsgetriebegängen E1 b, E2b, E3b ein Start des Verbrennungsmotors möglich, insbesondere auch in der Ausgestaltung ohne Trennkupplung. Der Start des Verbrennungsmotors kann in den elektromotorischen Vorwärtsgetriebegängen E1b, E2b, E3b, E4b rückwirkungsfrei erfolgen, indem lediglich ein Teil der von dem oder den Elektromotoren EM1 b, EM2b abgegebenen Leistung an den Verbrennungsmotor geleitet wird. Während einer Fahrt kann mittels der Elektromotoren EM1 b, EM2b eine Drehzahl des Verbrennungsmotors stufenlos vorgegeben werden, wenn zumindest die Schalteinheit S2b geschlossen ist. Die Schalteinheit S2b kann in sämtlichen elektromotorischen Vorwärtsgetriebegängen E1 b, E2b, E3b, E4b geschlossen werden. Ein Übersetzungsverhältnis zwischen dem Elektromotor EM1b, der vorzugsweise zum Starten der Brennkraftmaschine genutzt wird, und der Brennkraftmaschine hängt dabei von einer Kraftfahrzeuggeschwindigkeit und dem geschalteten elektromotorischen Vorwärtsgetriebegang E1 b, E2b, E3b, E4b ab. Im Fahrzeugstillstand ist der Verbrennungsmotor mittels des Elektromotors EM1b startbar, indem die Schalteinheiten S3b, S4b, S6b geschlossen und die Getriebeausgangswelle 12b fixiert werden, beispielsweise durch Betätigen einer Fahrzeugbremse. Alternativ ist der Verbrennungsmotor mittels des Elektromotors EM2b startbar, indem die Schalteinheiten S1b, S3b geschlossen und die Getriebeausgangswelle 12b fixiert werden. Ist lediglich eine der Schalteinheiten S1 b, S3b geschlossen, kann die Drehzahl der Brennkraftmaschine mittels beider Elektromotoren EM1 b, EM2b stufenlos vorgegeben werden.

Der erste elektromotorische Vorwärtsgetriebegang E1b weist in diesem Ausführungsbeispiel zwischen dem Rotorelement 19b und der Getriebeausgangswelle 12b ein Übersetzungsverhältnis auf, das in etwa doppelt so groß ist wie ein Übersetzungsverhältnis des ersten verbrennungsmotorischen Vorwärtsgetriebegangs V1 b. Entsprechend groß ist ein Antriebsmoment, das in dem ersten elektromotorischen Vorwärtsgetriebegang E1b an den Antriebsrädern bereitgestellt werden kann. Der erste elektromotorische Vorwärtsgetriebegang E1b wird gebildet, indem die drei Schalteinheiten S2b, S3b, S6b geschlossen werden. Das zweite Hohlrad P23b ist fixiert. Das zweite Sonnenrad P21 b weist eine gleiche Drehzahl auf wie das Rotorelement 19b. Eine Drehzahl des zweiten Planetenradträgers P22b ist durch das Standübersetzungsverhältnis des zweiten Planetenradgetriebes P2b definiert. Das dritte Sonnenrad P31 b rotiert mit der gleichen Drehzahl wie der zweite Planetenradträger P22b. Das dritte Hohlrad P33b ist fixiert. Eine Drehzahl des dritten Planetenradträgers P32b und damit die Drehzahl der Getriebeausgangswelle 12b ist somit durch die Drehzahl des zweiten Planetenradträgers P22b und das dritte Standübersetzungsverhältnis des dritten Planetenradgetriebes P3b definiert: Ein Leistungsfluss für den ersten elektromotorischen Vorwärtsgetriebegang E1b wird über das zweite Planetenradgetriebe P2b eingeleitet und über das dritte Planetenradgetriebe P3b ausgeleitet.

Der zweite elektromotorische Vorwärtsgetriebegang E2b wird gebildet, indem die zwei Schalteinheiten S5b, S6b geschlossen werden. Das dritte Sonnenrad P31 b weist eine gleiche Drehzahl auf wie das Rotorelement 19b. Das dritte Hohlrad P33b ist fixiert. Eine Drehzahl des dritten Planetenradträgers P32b und damit die Drehzahl der Getriebeausgangswelle 12b sind somit durch das Standübersetzungsverhältnis des dritten Planetenradgetriebes P3b und eine Drehzahl des dritten Sonnenrads P31 b definiert. Ein Leistungsfluss für den zweiten elektromotorischen Vorwärtsgetriebegang E2b wird ausgehend von dem Rotorelement 19b lediglich über das dritte Planetenradgetriebe P3b geleitet.

Der dritte elektromotorische Vorwärtsgetriebegang E3b wird gebildet, indem die drei Schalteinheiten S2b, S3b, S4b geschlossen werden. Das zweite Sonnenrad P21 b weist eine gleiche Drehzahl auf wie das Rotorelement 19b. Das zweite Hohlrad P23b ist fixiert. Eine Drehzahl des zweiten Planetenradträger P22b ist somit durch das Standübersetzungsverhältnis des zweiten Planetenradgetriebes P2b und die Drehzahl des Rotorelements 19b definiert. Das dritte Sonnenrad P31b weist die gleiche Drehzahl auf wie der zweite Planetenradträger P22b. Das dritte Hohlrad P33b weist die gleiche Drehzahl auf wie das Rotorelement 19b. Eine Drehzahl des dritten Planetenradträgers P32b ist somit durch die Drehzahl des zweiten Planetenradträgers P22b und die Drehzahl des Rotorelements 19b definiert. Die Drehzahl der Getriebeausgangswelle 12b ist somit durch das Standübersetzungsverhältnis des zweiten Planetenradgetriebes P2b und ein Drehzahlverhältnis zwischen dem Rotorelement 19b und dem zweiten Planetenradträger P22b definiert. Ein Leistungsfluss für den zweiten elektromotorischen Vorwärtsgetriebegang E2b wird ausgehend von dem Rotorelement 19b auf die beiden Planetenradgetriebe P2b, P3b aufgesplittet und über das dritte Planetenradgetriebe P3b rekombiniert und wieder ausgeleitet.

Der vierte elektromotorische Vorwärtsgetriebegang E4b wird gebildet, indem die Schalteinheiten S4b, S5b geschlossen werden. Das dritte Hohlrad P33b und das dritte Sonnenrad P31 b weisen somit eine gleiche Drehzahl wie das Rotorelement 19b auf. Das dritte Planetenradgetriebe P3b ist damit verblockt. Die Getriebeausgangswelle 12b weist somit eine gleiche Drehzahl auf wie das Rotorelement 19b. Ein Leistungsfluss für den vierten elektromotorischen Vorwärtsgetriebegang E4b wird lediglich über das dritte Planetenradgetriebe P3b geleitet.

In den EVT-Fahrbereichen EVT1b, EVT2b, EVT3b, EVT4b ist ein Drehzahlverhältnis zwischen der Getriebeeingangswelle 11 b und der Getriebeausgangswelle 12b mittels den Elektromotoren EM1 b, EM2b zumindest in Teilbereichen stufenlos verstellbar. Dazu wird in den EVT-Fahrbereichen EVT1b, EVT2b, EVT3b, EVT4b jeweils einer der Elektromotoren EM1b, EM2b als Generator betrieben, während der andere Elektromotor EM1b, EM2b eine Antriebsleistung bereitstellt. In den EVT-Fahrbereichen EVT1 b, EVT2b, EVT3b wird je nach Betriebszustand eine elektrische Leistung aus einer Batterie entnommen oder es wird der Batterie elektrische Leistung zugeführt. Die EVT-Fahrbereiche EVT1 b, EVT2b, EVT3b, EVT4b ermöglichen insbesondere ein Anfahren aus einem Fahrzeugstillstand, d.h. bei geeigneter Drehzahl der Rotorelemente 18b,19b weist die Getriebeeingangswelle 11 b eine Drehzahl ungleich Null auf, während gleichzeitig die Getriebeausgangswelle 12b eine Drehzahl von Null aufweist. Durch eine Veränderung von Drehzahlen der Rotorelemente 18b, 19b kann dann die Drehzahl der Getriebeausgangswelle 12b verändert werden. Zudem sind die EVT-Fahrbereiche EVT1b, EVT2b, EVT3b, EVT4b für eine leistungsneutrale Fahrt vorgesehen, d.h. einer der Elektromotoren EM1b, EM2b läuft in einem Generatorbetrieb und stellt dabei eine Leistung, die von dem anderen der Elektromotoren EM1b, EM2b aufgenommen wird, vollständig bereit. Dabei ist insbesondere der erste EVT-Fahrbereich EVT1 b zum Anfahren und zur Schaltung eines Rückwärtsgetriebegangs vorgesehen.

Der erste EVT-Fahrbereich EVT1b wird geschaltet, indem die Schalteinheiten S2b, S3b, S6b geschlossen werden. Eine von dem Verbrennungsmotor bereitgestellte Leistung wird über das erste Planetenradgetriebe P1 b aufgesplittet. Ein Teil der Leistung wird von dem ersten Elektromotor EM1 b in elektrische Leistung umgewandelt. Ein weiterer Teil der Leistung wird über die Schalteinheit S2b auf die Zwischenwelle 17b übertragen. Eine von dem zweiten Elektromotor EM2b abgegebene Leistung wird auf das zweite Sonnenrad P21 b geleitet. Das zweite Hohlrad P23b ist fixiert. Das zweite Planetenradgetriebe P2b leitet somit die Leistung des zweiten Elektromotors EM2b ebenfalls über die Schalteinheit S2b auf die Zwischenwelle 17b weiter. An der Schalteinheit S2b wird der eine Teil der von dem Verbrennungsmotor abgegebenen Leistung und die von dem zweiten Elektromotor EM2b abgegebene Leistung kombiniert. Die kombinierte Leistung wird über das dritte Planetenradgetriebe P3b ausgeleitet.

Der zweite EVT-Fahrbereich EVT2b wird geschaltet, indem die Schalteinheiten S1b, S2b, S6b geschlossen werden. Eine von dem Verbrennungsmotor bereitgestellte Leistung wird über das erste Planetenradgetriebe P1 b auf das zweite Planetenradgetriebe P2b weitergeleitet und aufgesplittet. Ein Teil der Leistung wird über das dritte Planetenradgetriebe P3b ausgeleitet. Ein weiterer Teil wird von dem zweiten Elektromotor EM2b in elektrische Leistung umgewandelt. Eine von dem ersten Elektromotor EM1 b abgegebene Leistung wird über das erste Sonnenrad P11 b in das erste Planetenradgetriebe P1 b eingeleitet und dort mit der von dem Verbrennungsmotor abgegebenen Leistung kombiniert.

Der dritte EVT-Fahrbereich EVT3b wird geschaltet, indem die Schalteinheiten S1 b, S2b, S4b geschaltet werden. Eine von dem Verbrennungsmotor bereitgestellte Leistung wird über das erste Planetenradgetriebe P1 b geleitet und an der Schalteinheit S2b aufgesplittet. Ein Teil der Leistung wird über das zweite Planetenradgetriebe P2b geleitet und auf den ersten Elektromotor EM1b, das erste Planetenradgetriebe P1b und das dritte Planetenradgetriebe P3b aufgesplittet. Ein an den ersten Elektromotor EM1b geleiteter Teil der Leistung wird in elektrische Leistung umgewandelt. Ein auf das erste Planetenradgetriebe P1 b geleiteter Teil wird mit der von der Antriebsmaschine abgegebenen Leistung rekombiniert. Eine auf das dritte Planetenradgetriebe P3b weitergeleitete Leistung wird mit einer von dem zweiten Elektromotor EM2b abgegebenen Leistung kombiniert. Die Leistung wird über das dritte Planetenradgetriebe P3b ausgeleitet.

Der vierte EVT-Fahrbereich EVT4b wird geschaltet, indem die Schalteinheiten S1b, S4b, S5b geschaltet werden. Eine von dem Verbrennungsmotor bereitgestellte Leistung wird über das erste Planetenradgetriebe P1b geleitet und auf das zweite Planetenradgetriebe P2b weitergeleitet. Das zweite Planetenradgetriebe P2b splittet die Leistung auf. Ein Teil wird an dem zweiten Elektromotor EM2b in elektrische Leistung umgewandelt. Ein weiterer Teil wird mit einer von dem zweiten Elektromotor EM2b abgegebenen Leistung kombiniert und an das dritte Planetenradgetriebe P3b weitergeleitet. Über das verblockte dritte Planetenradgetriebe P3b wird die Leistung ausgeleitet.

Diese vier EVT-Fahrbereiche EVT1b, EVT2b, EVT3b, EVT4b sind untereinander sequentiell lastschaltbar. Zudem sind sieben weitere EVT-Fahrbereiche schaltbar, die je nach Betriebsstrategie genutzt werden können. Der fünfte EVT-Fahrbereich wird geschaltet, indem die Schalteinheiten S3b, S5b, S6b geschlossen werden. Der sechste EVT-Fahrbereich wird geschaltet, indem die Schalteinheiten S1b, S5b, S6b geschlossen werden. Der siebte EVT-Fahrbereich wird geschaltet, indem die Schalteinheiten S4b, S5b, S6b geschlossen werden. Der achte EVT-Fahrbereich wird geschaltet, indem die Schalteinheiten S2b, S3b, S4b geschlossen werden. Der neunte EVT-Fahrbereich wird geschaltet, indem die Schalteinheiten S2b, S5b, S6b geschlossen werden. Der zehnte EVT-Fahrbereich wird geschaltet, indem die Schalteinheiten S2b, S4b, S6b geschlossen werden. Der elfte EVT-Fahrbereich wird geschaltet, indem die Schalteinheiten S2b, S4b, S5b geschlossen werden.

Grundsätzlich ist auch eine Kombination der beiden Ausführungsbeispiele denkbar, d.h. ein Mehrstufengetriebe, welches ein erstes Planetenradgetriebe mit einem Doppelplanetenradsatz und ein drittes Planetenradgetriebe mit einem Doppelplanetenradsatz aufweist. Eine Anbindung eines mittleren zweiten Planetenradgetriebes sowie eine Anordnung von Schalteinheiten erfolgt dabei analog zu den vorangegangenen Ausführungsbeispielen.

## Patentansprüche

1. Mehrstufengetriebe, insbesondere für ein Kraftfahrzeug, mit zumindest drei, einem ersten, einem zweiten und einem dritten, wirkungsmäßig miteinander verbundenen Planetenradgetrieben (P1a, P2a, P3a; P1b, P2b, P3b), mit einer Getriebeeingangswelle (11 a; 11 b) zur Anbindung eines Verbrennungsmotors, mit einer Getriebeausgangswelle (12a; 12b) zur Anbindung von Antriebsrädern, mit einer ersten Zwischenwelle (14a; 14b) zur Anbindung eines ersten Elektromotors (EM1 a; EM1b), mit einer zweiten Zwischenwelle (15a; 15b) zur Anbindung eines zweiten Elektromotors (EM2a; EM2b) und mit sechs Schalteinheiten (S1a-S6a; S1 b-S6b), die jeweils zwei Kopplungselemente (S11 a-S62a; S11 b-S62b) aufweisen und die zumindest konstruktiv zur Schaltung von zumindest sechs verbrennungsmotorischen Vorwärtsgetriebegängen (V1 a-V6a; V1 b-V6b), zumindest vier elektromotorischen Vorwärtsgetriebegängen (E1a-E4a; E1b-E4b) und zumindest vier EVT-Fahrbereichen (EVT1a-EVT4a; EVT1b-EVT4b) vorgesehen sind, wobei zumindest eines der Planetenradgetriebe (P1a; P3b) einen Doppelplanetenradsatz aufweist.
**gekennzeichnet durch**
einen für zwei miteinander kämmende Planetenräder (P14a, P15a) vorgesehenen dritten Planetenradträger (P32a), der permanent drehfest mit zumindest zwei der Kopplungselemente (S42a, S61a) verbunden ist, sowie ein drittes Hohlrad (P33a), das permanent drehfest mit der Getriebeausgangswelle (12a) verbunden ist.

2. Mehrstufengetriebe nach Anspruch 1,
**gekennzeichnet durch**
einen ersten Planetenradträger (P12a), einen zweiten Planetenradträger (P22a) und eine Zwischenwelle (16a), die den ersten Planetenradträger (P12a) und den zweiten Planetenradträger (P22a) permanent drehfest mit einem der Kopplungselemente (S22a) verbindet, sowie ein erstes Hohlrad (P13a), das permanent drehfest mit der Getriebeeingangswelle (11a) verbunden ist.

3. Mehrstufengetriebe nach Anspruch 1 oder 2,
**gekennzeichnet durch**
einen dritten Planetenradträger (P32b), der permanent drehfest mit der Getriebeausgangswelle (12b) verbunden ist, sowie ein drittes Hohlrad (P33b), das permanent drehfest mit zumindest zwei der Kopplungselemente (S42b, S61 b) verbunden ist.

4. Mehrstufengetriebe nach einem der vorhergehenden Ansprüche,
**gekennzeichnet durch**
einen für zwei miteinander kämmende Planetenräder (P14b, P15b) vorgesehenen ersten Planetenradträger (P12b), der permanent drehfest mit der Getriebeeingangswelle (11 b) verbunden ist, sowie ein erstes Hohlrad (P13b), einen zweiten Planetenradträger (P22b) und eine Zwischenwelle (16b), die das erste Hohlrad (P13b) und den zweiten Planetenradträger (P22b) permanent drehfest mit einem der Kopplungselemente (S22b) verbindet.

5. Mehrstufengetriebe nach einem der vorhergehenden Ansprüche,
**gekennzeichnet durch**
ein erstes Sonnenrad (P11a; P11b) und ein Rotorelement (18a; 18b) für den ersten Elektromotor (EM1a; EM1b), die mittels der ersten Zwischenwelle (14a; 14b) permanent drehfest mit einem der Kopplungselemente (S11a; S11b) verbunden sind.

6. Mehrstufengetriebe nach einem der vorhergehenden Ansprüche,
**gekennzeichnet durch**
ein zweites Sonnenrad (P21a; P21b) und ein Rotorelement (19a; 19b) für den zweiten Elektromotor (EM2a; EM2b), die mittels der zweiten Zwischenwelle (15a; 15b) permanent drehfest mit zwei der Kopplungselemente (S41a, S52a; S41b; S52b) verbunden sind.

7. Mehrstufengetriebe nach einem der vorhergehenden Ansprüche,
**gekennzeichnet durch**
ein zweites Hohlrad (P23a; P23b), das permanent drehfest mit zwei der Kopplungselemente (S12a, S31a; S12b, S31b) verbunden ist.

8. Mehrstufengetriebe nach einem der vorhergehenden Ansprüche,
**gekennzeichnet durch**
ein drittes Sonnenrad (P31a; P31b) und eine Zwischenwelle (17a; 17b), die das dritte Sonnenrad (P31 a; P31 b) permanent drehfest mit zwei der Kopplungselemente (S21a, S51a; S21b, S51b) verbindet.

9. Mehrstufengetriebe zumindest nach den Ansprüchen 5 und 7,
**dadurch gekennzeichnet, dass**
eine der Schalteinheiten (S1a; S1b) dazu vorgesehen ist, das drehfest mit dem ersten Sonnenrad (P11a; P11b) verbundene Kopplungselement (S11a; S11b) und eines der drehfest mit dem zweiten Hohlrad (P23a; P23b) verbundenen Kopplungselemente (S12a; S12b) drehfest miteinander zu verbinden.

10. Mehrstufengetriebe zumindest nach Anspruch 7,
**dadurch gekennzeichnet, dass**
eine der Schalteinheiten (S3a; S3b) dazu vorgesehen ist, eines der drehfest mit dem zweiten Hohlrad (P23a; P23b) verbundenen Kopplungselemente (S31 a; S31 b) drehfest mit einem Getriebegehäuse (13a; 13b) zu verbinden.

11. Mehrstufengetriebe zumindest nach Anspruch 6 und nach Anspruch 1 oder 3,
**dadurch gekennzeichnet, dass**
eine der Schalteinheiten (S4a; S4b) dazu vorgesehen ist, eines der drehfest mit dem zweiten Sonnenrad (P21 a; P21b) verbundenen Kopplungselemente (S41a; S41 b) und eines der drehfest mit dem dritten Hohlrad (P33a) oder dem dritten Planetenradträger (P32b) verbundenen Kopplungselemente (S42a; S42b) drehfest miteinander zu verbinden.

12. Mehrstufengetriebe zumindest nach Anspruch 1 oder 3,
**dadurch gekennzeichnet, dass**
eine der Schalteinheiten (S6a; S6b) dazu vorgesehen ist, eines der drehfest mit dem dritten Planetenradträger (P32a) oder dem dritten Hohlrad (P33b) verbundenen Kopplungselemente (S61 a; S61 b) drehfest mit einem Getriebegehäuse (13a; 13b) zu verbinden.

13. Mehrstufengetriebe zumindest nach Anspruch 8 und nach Anspruch 2 oder 4,
**dadurch gekennzeichnet, dass**
eine der Schalteinheiten (S2a; S2b) dazu vorgesehen ist, das drehfest mit dem ersten Planetenradträger (P12a) oder dem ersten Hohlrad (P13b) verbundene Kopplungselement (S22a; S22b) und eines der drehfest mit dem dritten Sonnenrad (P31a; P31b) verbundenen Kopplungselemente (S21a; S21b) drehfest miteinander zu verbinden.

14. Mehrstufengetriebe zumindest nach den Ansprüchen 6 und 8,
**dadurch gekennzeichnet, dass**
eine der Schalteinheiten (S5a; S5b) dazu vorgesehen ist, eines der drehfest mit dem zweiten Sonnenrad (P21a; P21b) und eines der drehfest mit dem dritten Sonnenrad (P31a; P31b) verbundenen Kopplungselemente (S51a, S52a; S51b, S52b) drehfest miteinander zu verbinden.

## Claims

1. Multi-stage transmission, in particular for a motor vehicle, having at least three, a first, a second and a third planetary gear set (P1 a, P2a, P3a; P1 b, P2b, P3b), effectively connected with each other, having a gear input shaft (11a; 11 b) to connect an internal combustion engine, having a gear output shaft (12a; 12b) to connect drive wheels, having a first intermediate shaft (14a; 14b) to connect a first electric motor (EM1a; EM1b), a second intermediate shaft (15a; 15b) to connect a second electric motor (EM2a; EM2b), and having six switching units (S1a - S6a; S1b - S6b) which each have two clutch elements (S11a - S62a; S11b - S62b), and at least in construction terms to switch at least six internal combustion engine forward gears (V1a - V6a; V1b - V6b), at least four electric motor forward gears (E1a - E4a; E1b - E4b) and at least four EVT travel ranges (EVT1a -EVT4a; EVT1b - ET4b), wherein at least one of the planetary gear sets (P1 a; P3b) has a dual planetary gear,
**characterised by**
a third planetary gear carrier (P32a) provided for two planetary gears (P14a, P15a) meshing with each other, being durably connected rotationally securely to at least two of the clutch elements (S42a, S61 a), and also a third ring gear (P33a) which is durably connected rotationally securely to the gear output shaft (12a).

2. Multi-stage transmission according to claim 1,
**characterised by**
a first planetary gear carrier (P12a), a second planetary gear carrier (P22a) and an intermediate shaft (16a) which durably connects the first planetary gear carrier (P12a) and the second planetary gear carrier (P22a) rotationally securely to one of the clutch elements (S22a) and also a first ring gear (P13a) which is durably connected rotationally securely to the gear input shaft (11 a).

3. Multi-stage transmission according to claim 1 or 2,
**characterised by**
a third planetary gear carrier (P32b) which is durably connected rotationally securely to the gear output shaft (12b), and a third ring gear (P33b) which is durably connected rotationally securely to at least two of the clutch elements (S42b, S61b).

4. Multi-stage transmission according to one of the preceding claims,
**characterised by**
a first planetary gear carrier (P12b) provided for two planetary gears (P14b, P15b) meshing with each other, being durably connected rotationally securely to the gear input shaft (11 b), and also a first ring gear (P13b), a second planetary gear carrier (P22b) and an intermediate shaft (16b) which durably connects the first ring gear (P13b) and the second planetary gear carrier (P22b) rotationally securely to one of the coupling elements (S22b).

5. Multi-stage transmission according to one of the preceding claims,
**characterised by**
a first sun gear (P11a; P11b) and a rotor element (18a; 18b) for the first electric motor (EM1 a; EM1 b) which are durably connected by means of the first intermediate shaft (14a; 14b) rotationally securely to one of the clutch elements (S11a; S11b).

6. Multi-stage transmission according to one of the preceding claims.
**characterised by**
a second sun gear (P21 a; P21 b) and a rotor element (19a; 19b) for the second electric motor (EM2a; EM2b) which are durably connected by means of the second intermediate shaft (15a; 15b) rotationally securely to two of the clutch elements (S41a, S52a; S41b; S52b).

7. Multi-stage transmission according to one of the preceding claims,
**characterised by**
a second ring gear (P23a; P23b) which is durably connected rotationally securely to two of the clutch elements (S12a, S31a; S12b, S31 b).

8. Multi-stage transmission according to one of the preceding claims,
**characterised by**
a third sun gear (P31 a; P31b) and an intermediate shaft (17a; 17b) which durably connects the third sun gear (P31 a; P31 b) rotationally securely to two of the clutch elements (S21a, S51a; S21b, S51b).

9. Multi-stage transmission at least according to claims 5 and 7,
**characterised in that**
one of the switching units (S1a; S1b) is provided to rotationally securely interconnect the clutch element (S11a; S11b) rotationally securely connected to the first sun gear (P11 a; P11 b) and one of the clutch elements (S12a; S12b) rotationally securely connected to the second ring gear (P23a; P23b).

10. Multi-stage transmission according to claim 7,
**characterised in that**
one of the switching units (S3a; S3b) is provided to connect one of the clutch elements (S31a; S31 b) rotationally securely connected to the second ring gear (P23a; P23b) rotationally securely to a gear housing (13a; 13b).

11. Multi-stage transmission according to claim 6 and according to claim 1 or 3,
**characterised in that**
one of the switching units (S4a; S4b) is provided to rotationally securely interconnect one of the clutch elements (S41a; S41b) connected rotationally securely to the second sun gear (P21 a; P21 b) and one of the clutch elements (S42a; S42b) connected rotationally securely to the third ring gear (P33a) or the third planetary gear carrier (P32b).

12. Multi-stage transmission at least according to claim 1 or 3,
**characterised in that**
one of the switching units (S6a; S6b) is provided to connect one of the clutch elements (S61a; S61 b) connected rotationally securely to the planetary gear carrier (P32a) or to the third ring gear (P33b) rotationally securely to a gear housing (13a; 13b).

13. Multi-stage transmission at least according to claim 8 and according to claim 2 or 4,
**characterised in that**
one of the switching units (S2a; S2b) is provided to rotationally securely interconnect the clutch element (S22a; S22b) rotationally securely connected to the first planetary gear carrier (P12a) or to the first ring gear (P13b) and one of the clutch elements (S21a; S21b) rotationally securely connected to the third sun gear (P31 a; P31 b).

14. Multi-stage transmission at least according to claims 6 and 8,
**characterised in that**
one of the switching units (S5a; S5b) is provided to rotationally securely interconnect one of the clutch elements (S51a, S52a, S51b, S52b) rotationally securely connected to the second sun gear (P21 a; P21 b) and one of the clutch elements (S51a, S52a; S51b, S52b) rotationally securely connected to the third sun gear (P31 a; P31 b).

## Revendications

1. Boîte de vitesses multi-étagée, notamment pour un véhicule automobile, comprenant au moins trois, un premier, un deuxième, un troisième, engrenages planétaires (P1 a, P2a, P3a, P1 b, P2b, P3b) reliés entre eux de manière active, un arbre d'entrée de boîte de vitesses (11a, 11 b) permettant de relier un moteur à combustion, un arbre de sortie de boîte de vitesses (12a, 12b) destiné à relier des roues motrices, un arbre premier arbre intermédiaire (14a, 14b) destiné à relier un premier moteur électrique (EM1a, EM1b), un second arbre intermédiaire (15a, 15b) destiné à relier un second moteur électrique (EM2a, EM2b) et six unités de commutation (S1a-S6a, S1b-S6b), qui présentent respectivement deux éléments d'accouplement (S11a-S62a, S11b-S62b) et sont réalisées au moins du point de vue structurel pour la commutation d'au moins six rapports de boîte de vitesse de marche avant (V1 a-V6a, V1 b-V6b) associés au moteur à combustion interne, d'au moins quatre rapports de boîte de vitesse de marche avant (E1 a-E4a, E1 b-E4b) associés au moteur à combustion interne et au moins quatre plages de déplacement EVT (EVT1 a-EVT4a, EVT1 b-EVT4b), au moins l'un des engrenages planétaires (P1 a, P3b) présentant un jeu de doubles pignons planétaires, **caractérisé en ce qu'**un troisième porte-pignons planétaire (P32a) prévu pour deux pignons planétaires (P14a, P15a) s'engrenant l'un dans l'autre, qui est relié solidaire en rotation à au moins deux des éléments d'accouplement (S42a, S61a) ainsi qu'une troisième couronne (P33a), qui est reliée solidaire en rotation à l'arbre de sortie de boîte de vitesses (12a).

2. Boîte de vitesses multi-étagée selon la revendication 1, **caractérisée en ce qu'**un premier porte-pignons planétaire (P12a), un second porte-pignons planétaire (P22a) et un arbre intermédiaire (16a) qui relie solidaire en rotation le premier porte-pignons planétaire (P12a) et le second porte-pignons planétaire (P22a) à l'un des éléments d'accouplement (S22a) ainsi qu'une première couronne (P13a), qui est reliée solidaire en rotation à l'arbre d'entrée de boîte de vitesses (11 a).

3. Boîte de vitesses multi-étagée selon la revendication 1 ou la revendication 2, **caractérisée par** un troisième porte-pignons planétaire (P32b) qui est relié solidaire en rotation à l'arbre de sortie (12b) de boîte de vitesses, ainsi qu'une troisième couronne (P33b), qui est reliée solidaire en rotation à au moins deux des éléments d'accouplement (S42b, S61b).

4. Boîte de vitesses multi-étagée selon l'une quelconque des revendications précédentes, **caractérisée par** un premier porte-pignons planétaire (P12b) prévu pour deux pignons planétaires (P14b, P15b) s'engrenant l'un dans l'autre, qui est relié solidaire en rotation à l'arbre d'entrée (11b) de boîte de vitesses, ainsi qu'une première couronne (P13b), un second porte-pignons planétaire (P22b) et un arbre intermédiaire (16b) qui relie la première couronne (P13b) et le second porte-pignons planétaire (P22b) solidaire en rotation à l'un des éléments d'accouplement (S22b).

5. Boîte de vitesses multi-étagée selon l'une quelconque des revendications précédentes, **caractérisée par** une première roue solaire (P11 a, P11b) et un élément de rotor (18a, 18b) pour le premier moteur électrique (EM1 a, EM1 b), qui sont reliés solidaire en rotation par l'intermédiaire du premier arbre intermédiaire (14a, 14b) à l'un des éléments d'accouplement (S11a, S11b).

6. Boîte de vitesses multi-étagée selon l'une quelconque des revendications précédentes, **caractérisée par** une seconde roue solaire (P21 a, P21b) et un élément de rotor (19a, 19b) pour le second moteur électrique (EM2a, EM2b), qui sont reliés solidaire en rotation par l'intermédiaire du second arbre intermédiaire (15a, 15b) à deux des éléments d'accouplement (S41a, S52a, S41b, S52b).

7. Boîte de vitesses multi-étagée selon l'une quelconque des revendications précédentes, **caractérisée par** une second couronne (P23a, P23b), qui est reliée solidaire en rotation à deux des éléments d'accouplement (S12a, S31a, S12b, S31b).

8. Boîte de vitesses multi-étagée selon l'une quelconque des revendications précédentes, **caractérisée par** une troisième roue solaire (P31 a, P31b) et un arbre intermédiaire (17a, 17b) qui relie la troisième roue solaire (P31 a, P31b) solidaire en rotation à deux des éléments d'accouplement (S21a, S51a, S21b, S51b).

9. Boîte de vitesses multi-étagée au moins selon les revendications 5 et 7, **caractérisée en ce qu'**une des unités de commutation (S1a, S1b) est prévue pour relier solidaire en rotation l'élément d'accouplement (S11a, S11b) relié solidaire en rotation à la première roue solaire (P11 a, P11b) et l'un des éléments d'accouplement (S12a; S12b) reliés solidaire en rotation à la deuxième couronne (P23a, P23b).

10. Boîte de vitesses multi-étagée au moins selon la revendication 7, **caractérisée en ce qu'**une des unités de commutation (S3a, S3b) est prévue pour relier en rotation l'un des éléments d'accouplement (S31 a, S31 b) reliés solidaire en rotation à la deuxième couronne (P23a, P23b) à un boîtier (13a, 13b) de boîte de vitesses.

11. Boîte de vitesses multi-étagée au moins selon la revendication 6 et selon la revendication 1 ou la revendication 3, **caractérisée en ce qu'**une des unités de commutation (S4a, S4b) est prévue pour relier solidaire en rotation l'un des éléments d'accouplement (S41 a, S41 b) reliés solidaire en rotation à la deuxième roue solaire (P21 a, P21 b) et l'un des éléments d'accouplement (S42a, S42b) reliés solidaire en rotation à la troisième couronne (P33a) ou au troisième porte-pignons planétaire (P32b).

12. Boîte de vitesses multi-étagée au moins selon la revendication 1 ou la revendication 3, **caractérisée en ce qu'**une des unités de commutation (S6a, S6b) est prévue pour relier en rotation l'un des éléments d'accouplement (S61a, S61 b) reliés solidaire en rotation à la troisième couronne (P33b) ou au troisième porte-pignons planétaire (P32a) à un boîtier (13a, 13b) de boîte de vitesses.

13. Boîte de vitesses multi-étagée au moins selon la revendication 8 et selon la revendication 2 ou la revendication 4, **caractérisée en ce qu'**une des unité de commutation (S2a, S2b) est prévue pour relier solidaire en rotation l'élément d'accouplement (S22a, S22b) relié solidaire en rotation à la première couronne (P13b) ou au premier porte-pignons planétaire (P12a) et l'un des éléments d'accouplement (S21 a, S21 b) reliés solidaire en rotation à la troisième roue solaire (P31 a, P31 b).

14. Boîte de vitesses multi-étagée au moins selon les revendications 6 et 8, **caractérisée en ce qu'**une des unités de commutation (S5a, S5b) est prévue pour relier solidaire en rotation l'un des éléments d'accouplement (S51a, S52a, S51b, S52b) reliés solidaire en rotation à la deuxième roue solaire (P21 a, P21 b) et l'un des éléments d'accouplement (S51a, S52a, S51b, S52b) reliés solidaire en rotation à la troisième roue solaire (P31 a, P31 b).
